# EUROPÄISCHE PATENTSCHRIFT

(11) **EP 2 744 634 B1**
(45) Veröffentlichungstag und Bekanntmachung des Hinweises auf die Patenterteilung: **24.02.2021**
(21) Anmeldenummer: 12748445.9
(22) Anmeldetag: 17.08.2012
(51) Int. Cl.: B29C 35/08, B29C 33/00, B29C 35/16

(54) **BESTRAHLUNGS- BZW. FORMEINHEIT**
IRRADIATION AND FORMING UNIT
UNITÉ DE RAYONNEMENT ET DE MOULAGE

(30) Priorität: 18.08.2011 EP 11177959
(43) Veröffentlichungstag der Anmeldung: 25.06.2014
(73) Patentinhaber: Momentive Performance Materials GmbH, 51368 Leverkusen (DE)
(72) Erfinder: RIST, Stefan, 51381 Leverkusen (DE); TRUMM, Clemens, 53757 Sankt Augustin (DE); ALBRECHT, Holger, 51467 Bergisch Gladbach (DE)
(74) Vertreter: Gille Hrabal
(86) Internationale Anmeldenummer: PCT/EP2012/066057
(87) Internationale Veröffentlichungsnummer: WO 2013/024146

(56) Entgegenhaltungen:
- GB-A- 1 101 202
- JP-A- S62 111 706
- US-A- 5 885 514
- US-B1- 6 627 124

## Beschreibung

Die Erfindung betrifft eine Bestrahlungs- bzw. Formeinheit mit einer oder mehreren UV-Lichtquellen zum Härten lichthärtender Polymerzusammensetzungen. Die Bestrahlungs- bzw. Formeinheit der Erfindung erlaubt die hocheffiziente Herstellung von Polymer-Formkörpern oder Polymer-beschichteten Körpern insbesondere von Silikon-Formkörpern wahlweise im kontinuierlichen oder im diskontinuierlichen Verfahren. Die Bestrahlungs- bzw. Formeinheit der Erfindung erhöht insbesondere die Lebensdauer der transparenten Formen aus polymeren Formmaterialen, wie insbesondere solchen aus Polyacrylaten. Polyacrylatformen, die der direkten Strahlung beispielsweise einer üblichen UV-Lichtquelle mit Hg-Lampen mit breitem Strahlungsspektrum ausgesetzt werden, verformen sich, verfärben sich und verringern ihre UV-Durchlässigkeit nach wenigen Abformungen auf der bestrahlten Oberfläche und müssen daher bislang nach kurzem Gebrauch ausgetauscht werden. Wegen der aufwändig hergestellten Hochpräzisions-Formennester bzw. großvolumiger Formen ist dies unwirtschaftlich. Je nach Kosten für Herstellung einer Form aus beispielsweise Polyacrylat ist jedoch eine Nutzung von mindestens 50, bevorzugter mindestens 100 Abformungen bzw. Strahlungshärtungen erwünscht, ohne dass es zu einer signifikanten Verringerung der UV-Durchlässigkeit bzw. der Härtungsgeschwindigkeit kommt.

Die erfindungsgemäße Bestrahlungs- bzw. Formeinheit kann insbesondere zur Herstellung von Formkörpern aus lichthärtbaren Polymeren, insbesondere zur Herstellung von Elastomer-Formkörpern, Duromer-Formkörpern, thermoplastischen Formkörpern oder Formkörpern aus thermoplastischen Elastomeren eingesetzt werden.

Des weiteren soll die erfindungsgemäße Bestrahlungs- bzw. Formeinheit eine möglichst kompakte Form aufweisen, da der Aufbau vieler Spritzgießautomaten dies verlangt. Dazu spannt man die erfindungsgemäße Bestrahlungseinheit im Spritzgießautomaten an die entsprechend vorgesehene Formhaltevorrichtung. In dieser Position ist das maschinengesteuerte Füllen, Öffnen und Schließen der Formennester mit der lichthärtenden Polymerzusammensetzung möglich. Größere voluminöse Bestrahlungseinheiten würden demgegenüber aufwändige Spritzgießmaschinen mit entsprechend großen Formhaltevorrichtungen benötigen, die individuell angefertigt werden müssen, was zu stark erhöhten Kosten führt.

Aus dem Stand der Technik sind Formen mit transparenten Fenstern bekannt, die für die Formgebung und chemische Vernetzung von lichthärtbaren Polymeren in Betracht kommen. US 5401155 beschreibt eine Metallform mit einem lichtdurchlässigen Fenster auf der Frontseite, das senkrecht zur Lichtquelle angebracht ist. In der US 6627124, welche eine Formeinheit gemäß dem Oberbegriff des Anspruchs 1 offenbart, wird eine zweiteilige Form für die Herstellung von Linsenkörpern beansprucht, in der die eine Formenhälfte aus lichtdurchlässigem Material besteht. In der US 5885514 wird ein Verfahren gelehrt, wie man mit einer transparenten oberen und einer unteren Formenhälfte Dichtungen auf einer Dichtungsplatte ausformt und härtet. Die US 2007/141739 A1 offenbart die Härtung von Siliconformkörpern für die Verkapselung von Leuchtdioden (LED's).

In GB 1101202 wird ein Verfahren zur Herstellung dickwandiger Schichten aus transparenten Harzmaterialien beschrieben, bei dem die Giessform in einer teilweise transparenten äußeren Form steht, in die zur Verringerung des hydrostatischen Drucks in der Giessform eine Flüssigkeit mit im wesentlichen gleicher Dichte wie die des flüssigen und gehärteten Harzes eingefüllt wird.

JP S62 111706 A beschreibt ein Formverfahren für eine optische Aufzeichnungsdisk.

Die Herstellung von größeren Formkörpern aus lichthärtbaren Polymeren mit den bisher verfügbaren Lichtquellen erforderte aufgrund der starken Wärmeentwicklung konventioneller Lichtquellen stets einen Kompromiß zwischen den zur Auswahl stehenden UV-Licht-durchlässigen, transparenten Elementen und der zulässigen eingestrahlten Lichtleistung. Um preisgünstige, leicht bearbeitbare und haltbare lichtdurchlässige Elemente, d.h. Fenster, hierfür bereitzustellen, müssen die transparenten Materialien für den Lichteintritt eine Reihe von Forderungen erfüllen. Sie müssen das UV-Licht der gewünschten Wellenlänge möglichst vollständig ohne Absorptionsverluste durchlassen. Sie sollen insbesondere, wenn sie

Teil der formgebenden Formennestwand werden, leicht formgebend zu bearbeiten sein. D.h. die gewünschten Konturen der Formwand sollen mit einfachen Mitteln gestaltet und ausgeführt werden können. So ist Quarzglas zwar einerseits ideal als UV-Licht-durchlässiges Material, welches auch thermisch beständig und kratzfest ist, jedoch ist es nur schwer durch oberflächenbearbeitende Methoden umzuformen und weist einen hohen Preis auf. Transparente Elemente aus Quarzglas können zwar durchaus auch als Formennestwand oder Eintrittsfenster in einer Form in der Weise genutzt, die die mechanische Belastung verringert und die Bruchgefahr vermindert, jedoch ist die Verwendung an bestimmte Voraussetzungen gebunden. Hierbei muß auf die Sprödigkeit des Quarzglases Rücksicht genommen werden und auf die Haftung zwischen Quarzglas und einigen photogehärteten Polymeren, mit denen es sich haftend verbinden kann. Dies erschwert die Ablösung der Formkörper nach Härtung. Andere salzartige oder mineralische Gläser weisen ähnliche Vor- und Nachteile auf. Diese Materialien sind aber durchaus für einfach gestaltete Formnester oder Spritzkanäle geeignet, in denen kleinere planare Werkstücke als transparente Fenster eingesetzt werden können.

Die als Alternative in Betracht kommenden transparenten Thermoplaste sind unter den bisher bekannten UV-Bestrahlungsbedingungen hingegen nicht ausreichend wärmestandfest, bzw. ihre Lebensdauer ist zu gering. Die bei UV-Bestrahlung verwendeten Lichtquellen ziehen die transparenten Formen über verschiedene Mechanismen in Mitleidenschaft. Einerseits führt der sehr kurzwellige Anteil der UV-Strahlung zur Beschädigung der Polymerstruktur, andererseits führt die Wärmeentwicklung in den für die UV-Bestrahlung verwendeten Lichtquellen bzw. der Anteil der Strahlung insbesondere im IR-Bereich in den transparenten Formen zu einer erhöhten Wärmeentwicklung. Die durch die UV-Lichtquellen bewirkte Erwärmung der transparenten Formmaterialien führt zu deren Ausdehnung, wodurch die Formgenauigkeit der darin hergestellten Formkörper beeinträchtigt wird. Das Problem der Wärmeentwicklung wird natürlich umso gravierender, je kompakter die Bestrahlungs- und Formeinheiten gebaut sind.

Andererseits ist es jedoch vorteilhaft, dass sich viele transparente thermoplastische Kunststoffe im Vergleich zu Quarzglas leicht zu formgebenden Elementen für den Einsatz in Formkanälen oder in bzw. zu Formnestern (Formen-Kavitäten) verarbeiten lassen.

Die Erfinder der vorliegenden Patentanmeldung stellten sich daher die Aufgabe, eine möglichst kompakte und dennoch standfeste Bestrahlungs- und Formeinheit bereitzustellen, welche für eine Vielzahl von Spritzgießautomaten geeignet ist.

Dabei bestand ein Lösungsansatz zunächst im Kühlen der verwendeten transparenten Formen durch Kontakt der Formen mit einem geeigneten flüssigen Kühlmittel, allerdings nicht in denjenigen Bereichen, welche vom UV-Licht der verwendeten UV-Lampen durchdrungen wurden, da dies bisher als der Härtung abträglich angesehen wurde. Durch diese Art der Kühlung wird an der Grenzfläche zwischen dem Kühlmedium und der transparenten Form naturgemäß Wärme abgeführt. Durch Wärmeleitung innerhalb des Formenmaterials wird auch eine gewisse Wärmeabfuhr in dem Bereich der transparenten Form, der vom UV-Licht durchstrahlt wird, erreicht. Es wurde dabei jedoch eine noch als unzureichende anzusehende Wärmeabfuhr erzielt, insbesondere natürlich in den nicht unmittelbar mit dem flüssigen Kühlmittel in Kontakt stehenden insbesondere transparenten Bereichen. Die Erfinder der vorliegenden Patentanmeldung suchten daher nach Möglichkeiten die Kühlung der insbesondere aus thermoplastischen Materialen hergestellten transparenten Formkörper für die Aufnahme von UV-härtenden Harzzusammensetzungen und damit deren Haltbarkeit zu verbessern. Dabei sind verschiedene Möglichkeiten in Betracht gezogen worden, wie die Verwendung von weniger Wärme entwickelnden LED-UV-Lichtquellen. Diese erzeugen jedoch noch häufig eine zu geringe Strahlungsenergie. Eine andere Möglichkeit wurde im Kühlen der UV-Strahlungsquellen selbst gesehen, um deren Wärmeemission zu verringern, wie beispielsweise in US 2002/0118541 (A1) dargestellt. Auch dabei ist die Wärmeabfuhr insbesondere im Bereich der durchstrahlten Flächen der transparenten Formen jedoch noch zu gering. Außerdem ist die Kühlung der UV-Strahlungsquellen mit einem erhöhten apparativen Aufwand und damit einhergehenden erhöhten Kosten verbunden.

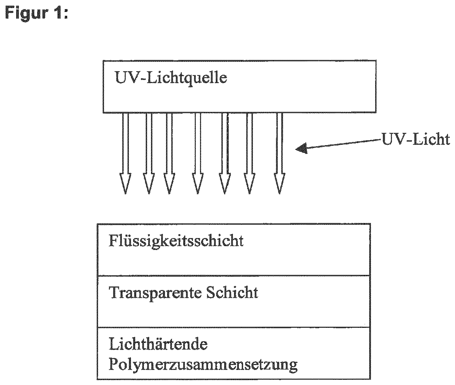

Überraschend fanden die Erfinder der vorliegenden Patentanmeldung nun, dass eine optimale und dennoch preiswerte Kühlung und damit einhergehend eine Verlängerung der Lebensdauer der transparenten Form möglich ist. Die erfindungsgemäße Positionierung der Kühlung bewirkt eine geringere Ausdehnung der Form und damit einhergehende Erhöhung der Formpräzision bzw. Maßhaltigkeit der gehärteten Formkörper. Die nachfolgend beschriebene Bestrahlungs- und Formeinheit bewahrt die Möglichkeit eine kompakte Bauform zu erzielen. Sie weist eine Flüssigkeitsschicht auf, welche zwischen der transparenten Schicht und einer oder mehreren UV-Lichtquellen angeordnet ist. Dabei ist die kühlende Flüssigkeitsschicht mit den UV-Lichtquellen nicht fest verbunden bzw. Bestandteil von diesen, wie schematisch in Fig.1 bis 3 zu sehen ist. Gleichwohl können gekühlte Form und UV-Lichtquelle wahlweise eine integrale Bestrahlungseinheit bilden. Entscheidend sind der Ort und die Positionierung der Flüssigkeitsschicht. Besonders überraschend wird bei dieser Anordnung die Vernetzungsgeschwindigkeit der härtbaren Polymerzusammensetzungen in der transparenten Form nicht wesentlich herabgesetzt. Des weiteren kann eine Kühlung der transparenten Form sowohl durch Wärmeübergang zwischen der Flüssigkeitsschicht und der transparenten Form als auch durch eine selektive Absorption der Wärme- bzw. IR-Strahlung, welche von der UV-Strahlungsquelle emittiert wird, erzielt werden, ohne dass es dazu besonderer apparativer Maßnahmen an der UV-Stahlungsquelle bedurfte. Durch die Verwendung der erfindungsgemäßen Bestrahlungs- und Formeinheit wird die durch übermäßige Bestrahlung auftretende Verformung, Verfärbung und Trübung der transparenten Formelemente sehr stark unterdrückt. Den Erfindern ist es weiterhin gelungen, eine Vorrichtung zu schaffen, in der insbesondere thermoplastische UV-Lichtdurchlässige Elemente eingesetzt werden können, ohne diese bis an die Grenze der Wärmestandfestigkeit zu belasten, gleichzeitig aber eine große Lichtleistung pro Zeiteinheit in die zu härtende Polymerzusammensetzung einzutragen. Die transparenten Elemente können hinsichtlich ihrer Verträglichkeit (Wechselwirkung mit den lichthärtenden Polymeren) an die der lichthärtbaren Polymere angepasst werden. Im Ergebnis erzielt man mit der erfindungsgemäßen Vorrichtung deutlich längere Nutzungsdauern der transparenten Formen, was insgesamt zu einer höheren UV-Lichtausbeute bezogen auf die eingesetzte Energie bzw. Strahlungsleistung führt. Die Vorrichtung erlaubt generell Verarbeitungsverfahren mit einer niedrigen Werkzeugtemperatur, die beispielsweise für den 2-Komponenten-Spritzguss Vorteile bietet, wenn die Verbundkomponente wärmeempfindlich ist, oder dann, wenn die Umspritzung von Einlegeteilen aus Kunststoffen mit geringer Wärmestandfestigkeit erfolgen soll. Die Erfindung erlaubt weiterhin die Herstellung und Anwendung kompakter, integraler Formen für das Erzeugen von lichtgehärteten Formartikeln, worin die UV-transparenten Materialien der Formen trotz überlagerter Flüssigkeitsschicht ausreichend UV-Licht-durchlässig sind und durch die erfindungsgemäße Flüssigkeitsschicht eine hohe Lebensdauer mit verringerter Versprödungs- und Trübungsneigung besitzen.

Die vorliegende Erfindung stellt somit eine Formeinheit zum Härten lichthärtender Polymerzusammensetzungen bereit, umfassend:
- mindestens eine Form zur Aufnahme einer lichthärtenden Polymerzusammensetzung,
- mindestens eine transparente Schicht, welche im Kontakt mit der lichthärtenden Polymerzusammensetzung steht und welche für die UV-Strahlen durchlässig ist, worin die transparente Schicht, welche im Kontakt mit der lichthärtenden Polymerzusammensetzung steht, aus Polymethacrylat besteht, und
- mindestens eine Flüssigkeitsschicht, welche so angeordnet ist, dass sie beim Bestrahlen der transparenten Schicht durchstrahlt wird.

Eine besondere Ausgestaltung der erfindungsgemäßen Formeinheit zum Härten lichthärtender Polymerzusammensetzungen, umfasst:
- ein oder mehrere UV-Lichtquellen zum Bestrahlen mindestens einer transparenten Schicht, welche im Kontakt mit der lichthärtenden Polymerzusammensetzung steht, und welche zwischen den UV-Lichtquellen und der lichthärtenden Polymerzusammensetzung liegt,
- mindestens eine Form zur Aufnahme der lichthärtenden Polymerzusammensetzung, und
- mindestens eine Flüssigkeitsschicht, welche zwischen der transparenten Schicht und einer oder mehreren UV-Lichtquellen angeordnet ist, und welche mit den UV-Lichtquellen nicht fest verbunden ist.

(Diese Formeinheit wird im Folgenden auch kurz Bestrahlungseinheit genannt). Der Begriff "mit den UV-Lichtquellen nicht fest verbunden" bedeutet dabei, dass die Flüssigkeitsschicht nicht Bestandteil der UV-Lichtquelle bzw. deren Gehäuse ist. Vielmehr ist die Flüssigkeitsschicht im Allgemeinen räumlich getrennt von der UV-Lichtquelle bzw. deren Gehäuse angeordnet. Gleichwohl kann die Bestrahlungs (und Form)-einheit die Flüssigkeitsschicht und die UV-Lichtquelle in einer festen Anordnung zueinander enthalten. Allerdings ist die UV-Lichtquelle auch dann eine von der Flüssigkeitsschicht separate Einheit, wird also getrennt von der Flüssigkeitsschicht hergestellt, vertrieben und verwendet.

### Beschreibung der Abbildungen

Eine Ausführungsform der Bestrahlungs- bzw. Formeinheit der vorliegenden Erfindung ist schematisch in Figur 1 gezeigt. Bei dieser Ausführungsform der Bestrahlungseinheit der vorliegenden Erfindung befindet sich die Flüssigkeitsschicht in unmittelbaren Kontakt zur transparenten Schicht, und die Flüssigkeitsschicht ist zur Seite der UV-Lichtquelle offen, das heißt nicht mit einem Mantel umschlossen. Diese besonders einfache Ausführungsform der Bestrahlungs- bzw. Formeinheit der vorliegenden Erfindung lässt sich beispielsweise so realisieren, dass ein Flüssigkeitsfilm über die transparente Schicht geleitet wird. Dabei kann die Dicke der Flüssigkeitsschicht durch Vorhalten entsprechend hoher Seitenwände im Bereich der Flüssigkeitsschicht variiert werden

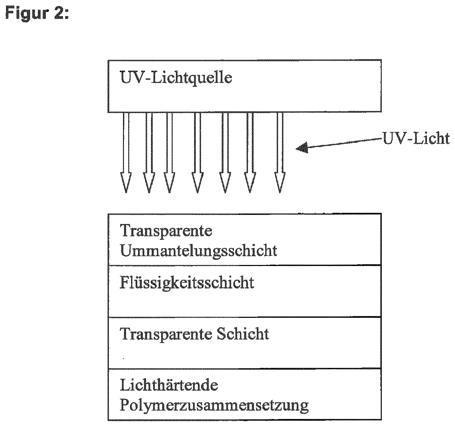

Eine weitere Ausführungsform der vorliegenden Erfindung ist schematisch in Figur 2 gezeigt. Diese Ausführungsform zeichnet sich gegenüber der in Figur 1 gezeigten Ausführungsform dadurch aus, dass die Flüssigkeitsschicht zwischen der transparenten Schicht und einer transparenten Ummantelungsschicht sozusagen umschlossen geführt wird. Dabei können Dichtelemente zwischen der transparenten Schicht und der transparenten Ummantelungsschicht vorgehalten werden (nicht eingezeichnet), welche ein Austreten der Flüssigkeitsschicht wirksam verhindern.

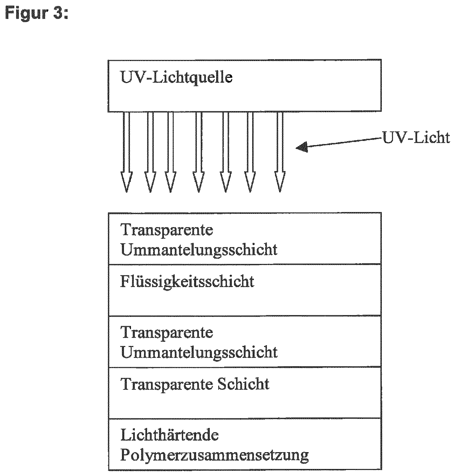

Eine weitere Ausführungsform der vorliegenden Erfindung ist schematisch in Figur 3 gezeigt. Diese Ausführungsform zeichnet sich gegenüber der in Figur 1 gezeigten Ausführungsform dadurch aus, dass die Flüssigkeitsschicht von beiden Seiten einer transparenten Ummantelungsschicht umgeben ist. In der hier gezeigten Ausführungsform steht die von der UV-Lichtquelle abgewandte transparente Umwandlungsschicht in direktem, formschlüssigen Kontakt zur transparenten Schicht, welche im Kontakt mit der lichtleitende Polymerzusammensetzung steht. Diese Ausführungsform bietet den Vorteil, dass die die Flüssigkeitsschicht aufnehmenden Elemente nicht in festem Kontakt zur transparenten Schicht stehen müssen, was Austausch der Flüssigkeitsschicht und Mantel, zusammen auch Kühlkanal genannt, erleichtert. Dies hat den Vorteil, dass die Flüssigkeits- respektive Kühl- bzw. Wärmeabsorptionsschicht als separates Bauteil ausgeführt werden kann, welches sich im Betrieb bei nachlassender UV-Durchlässigkeit der transparenten Ummantelungsschichten, rasch austauschen lassen kann. Dabei wird die im allgemeinen als Teil der Form zur Aufnahme der lichthärtenden Polymerzusammensetzung vorliegende transparente Schicht nicht beeinträchtigt, bzw. ihre Lebensdauer erhöht.

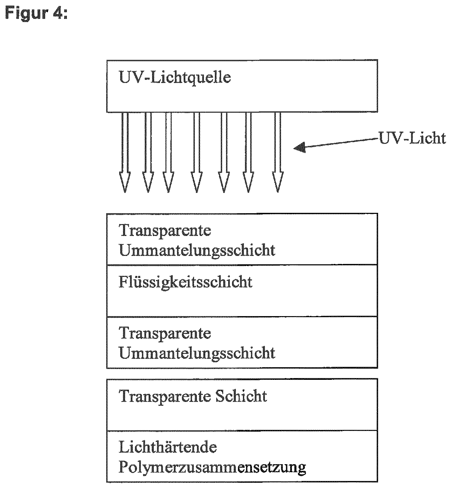

Figur 4 zeigt eine besondere Ausgestaltung der Ausführungsform aus Figur 3, bei der die von den beiden transparenten Ummantelungsschichten umgebende Flüssigkeitsschicht von der transparenten Schicht beabstandet ist. Diese Ausführungsform erlaubt es ebenfalls die Flüssigkeitsschicht in einfacher Weise als austauschbare Kühlplatte zwischen die transparente Schicht und die UV-Lichtquelle zu schieben. Die Kühlwirkung ist auch bei dieser Ausführungsform, bei der die abgekapselte Flüssigkeitsschicht von der transparenten Schicht beabstandet ist, in vielen Fällen ausreichend. Durch Durchleiten eines bevorzugt gekühlten Luftstroms zwischen der gekapselten Flüssigkeitsschicht und der transparenten Schicht kann eine zusätzliche Kühlwirkung erzielt werden.

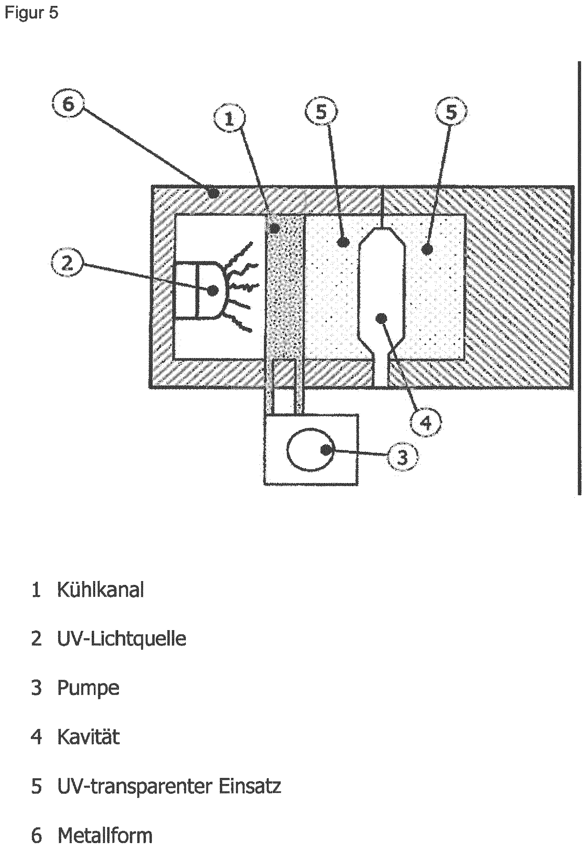

Figur 5 zeigt eine konkrete Ausführungsform einer Bestrahlung-und Formeinheit der vorliegenden Erfindung, bei der die Flüssigkeitsschicht im direkten Kontakt zur UV-transparenten Schicht steht. Die Flüssigkeitsschicht ist zur Seite der UV-Lampe hin gekapselt. Zur UV-transparenten Schicht hin, kann die Flüssigkeitsschicht in direktem Kontakt mit der UV-transparenten Schicht stehen, oder eine weitere Ummantelungsschicht kann zwischen der Flüssigkeitsschicht und der UV-transparenten Schicht vorgesehen sein. Im letzteren Fall können die die Flüssigkeitsschicht bildenden Elemente als separates, austauschbares Bauteil ausgebildet sein. Auch wenn nur eine Umkapselungsschicht zur UV-Lichtquelle hin vorgesehen ist, kann diese leicht bei nachlassender Transparenz ausgetauscht werden.

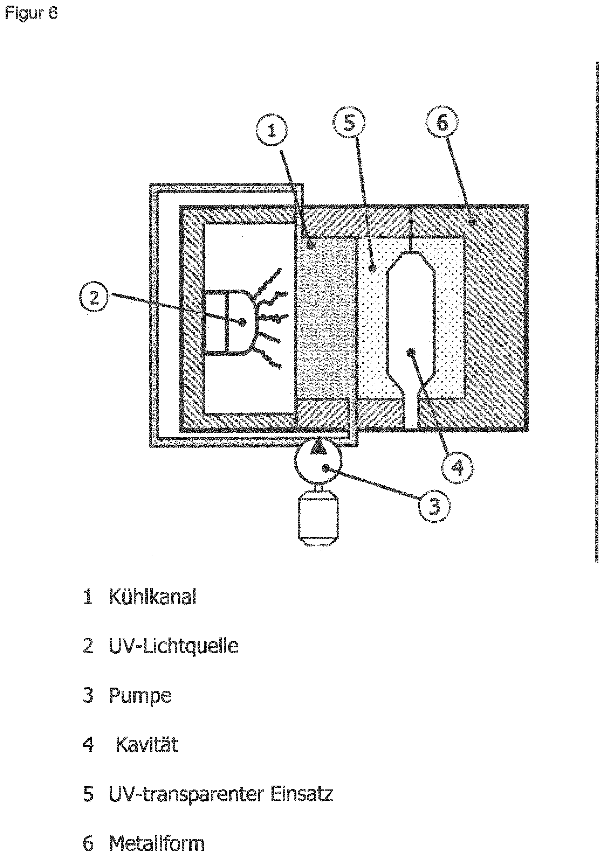

Figur 6 zeigt eine weitere konkrete Ausführungsform einer Bestrahlungs- und Formeinheit der vorliegenden Erfindung, bei der die Flüssigkeitsschicht im direkten Kontakt zur UV-transparenten Schicht steht. Dabei wird die in der Flüssigkeitsschicht vorhandene Flüssigkeit umgepumpt. In den resultierenden Kühlkreislauf wird bevorzugt ein Wärmetauscher integriert (nicht eingezeichnet). Auch in dieser Ausführungsform können die die Flüssigkeitsschicht umfassenden Elemente als austauschbares Bauteil ausgeführt werden.

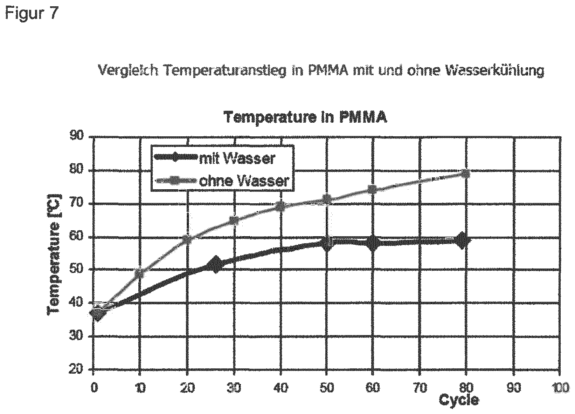

Figur 7 zeigt für eine Figur 3 entsprechende Ausführungsform der Erfindung, bei der die transparente Schicht als Teil der Form zur Aufnahme der lichthärtenden Polymerzusammensetzung aus Polymethylmethacrylat (PMMA) gebildet ist, die Temperaturentwicklung in der transparenten Schicht in Abhängigkeit der Zahl der Bestrahlungszyklen. Als Flüssigkeitsschicht wurde eine durchströmende Wasserschicht von ca. 20 °C verwendet. Die Flüssigkeitsschicht war gekapselt und stand in direktem Kontakt zur PMMA-Schicht. Wie aus der Figur 7 ersichtlich wird, führt die Verwendung der erfindungsgemäßen Flüssigkeitsschicht zu einer signifikanten Temperaturverringerung in der PMMA-Formschicht, welche auf diese Weise einer deutlich niedrigeren Vergilbung unterliegt, keine Verformung aufweist und deren Lebensdauer im Hinblick auf die UV-Lichtdurchlässigkeit deutlich verlängert ist.

Die erfindungsgemäß in der Bestrahlungseinheit verwendete Flüssigkeitsschicht erfüllt nach heutigem Kenntnisstand im wesentlichen die folgenden Funktionen.

Zum einen kühlt sie die transparente Schicht insbesondere im Bereich, welcher den UV-Lichtquellen zugewandt ist bzw. vom UV-Licht durchdrungen wird, indem sie Wärme aus der transparenten Formschicht aufnimmt und abführt. Zum anderen absorbiert sie Wärme- bzw. IR-Strahlung, welche in den UV-Lichtquellen erzeugt wird und verhindert dadurch bereits ein darauf zurückgehendes Erwärmen der transparenten Formschicht sowie deren Verformung. Des weiteren kann die Flüssigkeitsschicht so ausgelegt werden, dass sie auch Teile des kürzerwelligen Anteils des UV-Lichtes, welcher ebenfalls die Lebensdauer der transparenten Formschicht herabzusetzen kann, absorbiert. Überraschend wird durch diesen vergleichsweise einfachen Aufbau insbesondere eine besonders effiziente Kühlung der transparenten Formschicht und eine damit einhergehende Verlängerung der Lebensdauer sowie eine geringe Verformung der transparenten Formschicht entsprechend einer erhöhten Formpräzision der hergestellten gehärteten Formkörper erreicht.

### Beschreibung der bevorzugten Ausführungsformen der Erfindung

In einer bevorzugten Ausführungsform der vorliegenden Erfindung ist die Bestrahlungs- bzw. Formeinheit, dadurch gekennzeichnet, dass die Dicke der Flüssigkeitsschicht zwischen 0,01 mm bis 50 mm, bevorzugt 1-10 mm, beträgt. Die genannte Dicke umfasst dabei tatsächlich nur die Dicke der Flüssigkeitsschicht und nicht die Dicke der sie gegebenenfalls umgebenden Umkapselungsschichten. Wird die Dicke der Flüssigkeitsschicht zu gering bemessen, reicht die Filterwirkung (Temperatur und Strahlung) in manchen Fällen nicht aus. Eine höhere Dicke als 50 mm im allgemeinen nicht sinnvoll, da sie keinen zusätzlichen Beitrag zur Kühlung leistet.

In einer weiteren bevorzugten Ausführungsform der vorliegenden Erfindung ist die Bestrahlungseinheit, dadurch gekennzeichnet, dass die Dicke der Flüssigkeitsschicht so bemessen ist, dass mindestens 70%, bevorzugt mindestens 80%, bevorzugter mindestens 90% des Anteils an der Gesamtstrahlung der UV-Lichtquellen im Bereich von > 700 nm absorbiert werden.

In einer weiteren bevorzugten Ausführungsform der vorliegenden Erfindung ist die Bestrahlungseinheit dadurch gekennzeichnet, dass die Flüssigkeitsschicht sowohl im Kontakt mit der genannten transparenten Schicht als auch im Kontakt mit den UV-Lichtquellen steht. Eine solche Ausführungsform kann beispielsweise dadurch realisiert werden, dass die Flüssigkeitsschicht über der transparenten Schicht unter Verwendung von geeigneten Seitenwänden steht bzw. strömt, und die UV-Lichtquellen in die Flüssigkeitsschicht eintauchen bzw. diese berühren.

Bevorzugter ist es jedoch, dass zwischen der bzw. den UV-Lichtquellen und der Flüssigkeitsschicht ein Abstand im Bereich von mindestens 1 mm, bevorzugter >10 mm, noch bevorzugter > 30 mm vorgesehen ist. Bevorzugt beträgt der Abstand maximal 150 mm, bevorzugter maximal 100 mm. Es ergeben sich entsprechende Vorzugebereiche von beispielsweise 1 bis 150 mm und 10 bis 100 mm.

In einer bevorzugten Ausführungsform der Bestrahlungseinheit weist in diese Mittel zum Austausch der Flüssigkeit in der Flüssigkeitsschicht auf. Derartige Mittel sorgen dafür, dass die Flüssigkeit in der Flüssigkeitsschicht durchgepumpt wird. Dies kann bevorzugt in einem Kreislauf mit angeschlossenem Wärmetauscher erfolgen. Bevorzugt beträgt der Massestrom in der Flüssigkeitsschicht mindestens 0,1 g/(min·cm²), bevorzugter 0,5-50 g/(min·cm²), noch bevorzugter 5-10 g/(min·cm²) beträgt.

In einer bevorzugten Ausführungsform der vorliegenden Erfindung steht die Flüssigkeitsschicht im direkten Kontakt mit der transparenten Schicht, welche von dem UV Licht durchstrahlt wird und welche im Kontakt mit der lichthärtenden Polymerzusammensetzung steht. Auf diese Weise wird naturgemäß mehr Wärme von der transparenten Schicht abgeführt, als in der Ausführungsform bei der zwischen der Flüssigkeitsschicht und der transparenten Schicht eine Ummantelungsschicht vorliegt. Die Ausführungsform der Bestrahlungseinheit, bei der die Flüssigkeitsschicht zwischen der transparenten Schicht und einer transparenten Ummantelungsschicht liegt, und mit diesen im Kontakt steht, reicht in vielen Fällen jedoch zur Wärmeabfuhr aus. Diese Ausführungsform ermöglicht im allgemeinen einen leichteren Austausch der die Flüssigkeitsschicht führenden Elemente.

In einer weiteren bevorzugten Ausführungsform der Bestrahlungseinheit der Erfindung ist diese dadurch gekennzeichnet, dass die Flüssigkeitsschicht zwischen zwei transparenten Ummantelungsschichten liegt, welche zwischen den UV-Lichtquellen und der transparenten Schicht angeordnet sind. Dabei kann sie, wie vorstehend erwähnt, die der transparenten Schicht zugewandte transparente Ummantelungsschicht mit der transparenten Schicht in Kontakt stehen oder von dieser beabstandet sein. Ungeachtet dessen besitzt diese Ausführungsform den Vorteil, dass das die Flüssigkeitsschicht umfassende Bauteil bestehend aus den beiden Ummantelungsschichten und der dazwischen liegenden Flüssigkeitsschicht sowie gegen den gegebenenfalls vorhandenen peripheren Bauteilen (Anschlüsse, Wärmetauscher, etc.) und welches beispielsweise nach Art einer Kühlplatte ausgebildet ist, leicht aus dem Strahlengang des UV Lichtes herausgenommen werden kann und gegen ein anderes entsprechendes neues Bauteil ausgetauscht werden kann, ohne dass größere Wartungsarbeiten erforderlich werden. Dies wird immer dann nötig, wenn die Transparenz insbesondere der der UV-Lichtquelle zugewandten Ummantelungsschicht soweit abgenommen hat, dass die Härtungsgeschwindigkeit inakzeptabel wird.

Die Ausführungsform nach der die von der UV-Lichtquelle abgewandte Ummantelungsschicht im Kontakt mit der transparenten Schicht steht, besitzt bereits erwähnt den Vorteil, dass eine bessere Wärmeabfuhr in der transparenten Schicht erfolgt. In einer bevorzugten Ausführungsform steht die Flüssigkeitsschicht im Kontakt mit einem Wärmetauscher zur Abführung der in ihr gebildeten Wärme. Bevorzugt ist die Flüssigkeit der Flüssigkeitsschicht derart, dass sie IR-Strahlung absorbiert. Gleichzeitig muss sie jedoch für UV-Strahlung durchlässig sein, da diese die Härtung der lichthärtenden Polymerzusammensetzung bewirkt. In einer bevorzugten Ausführungsform wird die Flüssigkeit der Flüssigkeitsschicht aus der Gruppe ausgewählt, die besteht aus: Wasser, aliphatischen Alkoholen, Kohlenwasserstoffen, ionischen Flüssigkeiten und Salzen sowie Mischungen davon. Die Flüssigkeit der Flüssigkeitsschicht kann zusätzlich einen oder mehrere IR-absorbierenden Zusätze enthalten. Derartige IR-absorbierende Zusätze schließen beispielsweise lösliche oder kolloidale IR-absorbierende Zusätze ein, die jedoch möglichst wenig UV Licht absorbieren, wie beispielsweise organische Verbindungen mit entsprechenden Absorptionsspektren oder geeignete kolloidale Oxide bzw. Hydroxide von Metallen wie Al, B, Ce, In, Sn oder Halbmetallen wie Si, Ge die gegebenenfalls mit organischen Gruppen modifiziert sein können.

In einer weiteren Ausführungsform der Bestrahlungseinheit ist diese dadurch gekennzeichnet, dass zusätzlich nicht-flüssigkeitsbasierende IR-Strahlungsfilter zwischen der UV-Lichtquelle und der transparenten Schicht angebracht sind. Derartige IR-Strahlungsfilter schließen beispielsweise ein: wellenlängensensitive Filter- oder dichroitische Spiegelelemente. In der erfindungsgemäßen Bestrahlungseinheit beträgt bei der UV-Lichtquelle einschließlich etwaiger Filterelemente der Anteil an der Gesamtstrahlung im Bereich von > 700 nm weniger als 15 % und im Bereich < 300 nm weniger als 15 %.

In einer weiteren Ausführungsform der erfindungsgemäßen Bestrahlungseinheit ist diese dadurch gekennzeichnet, dass sie ein oder mehrere lichtleitende und/oder lichtreflektierende Elemente aufweist.

In einer weiteren Ausführungsform der erfindungsgemäßen Bestrahlungseinheit ist diese dadurch gekennzeichnet, dass sie ein oder mehrere Einspritzkanäle für die lichthärtenden Polymerzusammensetzungen aufweist.

Die erfindungsgemäß verwendeten UV-Lichtquellen werden bevorzugt ausgewählt aus: UV-Leuchtstofflampen, Hochdruckquecksilberdampflampen, UV-Bogenlampen, Metallhalogenidlampen, Xenonlampen, Blitzlampen, nicht dotierte oder Fe- oder Gallium-dotierte Quecksilberlampen, und Schwarzlicht-Lampen. Besonders bevorzugt sind Fe- oder Gallium-dotierte Quecksilberlampen.

In der erfindungsgemäßen Bestrahlungseinheit kann der Abstand zwischen der Flüssigkeitsschicht und der UV-Lichtquelle feststehend oder variabel ist. Ein variabler Abstand kann vorteilhaft sein, um dadurch die Möglichkeit zu schaffen, gegebenenfalls noch weitere Elemente wie Filter oder Masken in den Strahlungsgang einzuführen.

Die erfindungsgemäße Bestrahlungseinheit ist bevorzugt so aufgebaut, dass sie aus mehreren Teilkomponenten besteht, die beim Zusammensetzen die Bestrahlungseinheit bilden. Im Allgemeinen besteht sie aus den Teilkomponenten: UV-Strahlungsquellen-Komponente, die Flüssigkeitsschicht aufnehmende Komponente und Form-Komponente. Die Zusammensetzung der genannten Komponenten kann starr oder lösbar erfolgen, wobei letzterer Ausführungsform der Vorzug zu geben ist, da sie einen Austausch der einzelnen Komponenten ermöglicht. In einer weiteren Ausführungsform der Bestrahlungseinheit weist diese ein oder mehrere Einspritzkanäle für die lichthärtende Polymerzusammensetzung auf, über die die Form in der die Härtung erfolgt, befüllt wird.

Die erfindungsgemäße Bestrahlungseinheit besitzt eine transparente Schicht, die im Kontakt mit der lichthärtenden Polymerzusammensetzung steht, und durch welche das UV-Licht in die lichthärtenden Polymerzusammensetzung eindringt und deren Härtung bewirkt. Die genannte transparente Schicht kann dabei bevorzugt Teil der Form zur Aufnahme der lichthärtenden Polymerzusammensetzungen sein, in welcher auch die Härtung stattfindet. Es ist jedoch auch möglich, die transparente Schicht in den genannten Einspritzkanälen vorzuhalten. Solche Einspritzkanäle können beispielsweise wie eine Belichtungsstation aufgebaut sein. Bei dieser Ausführungsform erfolgt in den Einspritzkanälen naturgemäß noch keine Aushärtung, d.h., die bestrahlte Polymerzusammensetzung bleibt fließfähig, gelangt in die Form, und härtet dort aus. Dies ist im allgemeinen dann der Fall, wenn die Bestrahlungsdauer kleiner als die sogenannte Gelzeit (s. beispielsweise EP 1817372 B1) ist. Auch in dieser Ausführungsform wird mit der erfindungsgemäßen Bestrahlungseinheit eine Kühlung und damit Verlängerung der Lebensdauer des aus PMMA gebildeten transparenten Bereichs bewirkt, und die Temperatur der bestrahlten lichthärtenden Polymerzusammensetzung mithin auch die Temperatur in der Härtungsform herabgesetzt. Dadurch kommt es wiederum zu einer höheren Formpräzision bei der endgültigen Aushärtung in der Härtungsform. In der erfindungsgemäßen Bestrahlungseinheit besteht die transparente Schicht, welche im Kontakt mit der lichthärtenden Polymerzusammensetzung steht, aus Polymethacrylaten, wie nachstehend noch genauer erläutert wird. In einer bevorzugten Ausführungsform besteht die gesamte Form zur Aufnahme der lichthärtenden Polymerzusammensetzung aus dem thermoplastischen Polymermaterial.

Erfindungsgemäß ist es jedoch auch möglich, dass die Form zur Aufnahme der lichthärtenden Polymerzusammensetzung nicht-transparente Abschnitte aufweist, welcher beispielsweise aus Metallen gebildet sind. Im Falle, dass die Bestrahlung im Bereich der transparenten Einspritzkanäle erfolgt, kann die gesamte Form zur Aufnahme der lichthärtenden Polymerzusammensetzung (gelegentlich als Härtungsform bezeichnet) aus nicht transparenten Materialien gebildet sein.

In einer weiteren Ausführungsform der vorliegenden Erfindung kann die Bestrahlungseinheit mehrere UV-Lichtquellen aufweisen.

Die erfindungsgemäß verwendeten UV-Lichtquellen weisen bevorzugt eine Strahlung von mindestens 0,1 mW / cm² auf.

Die erfindungsgemäße Bestrahlungseinheit kann zur kontinuierlichen oder diskontinuierlichen Herstellung von gehärteten Polymerformkörpern oder zur Herstellung von Körpern, die eine gehärtete Polymerschicht aufweisen, verwendet werden. Im letzteren Fall steht die lichthärtenden Polymerzusammensetzung in Kontakt mit einem zu beschichtenden Substrat.

Die erfindungsgemäße Bestrahlungseinheit dient bevorzugt der Härtung lichthärtender Silikonzusammensetzungen, welche nachstehend näher erläutert werden.

Aus der erfindungsgemäßen Formeinheit kann in einfacher Weise durch Hinzufügen kommerziell erhältlicher UV-Lichtquellen die erfindungsgemäße Bestrahlungseinheit gebildet werden.

Die Erfindung betrifft weiterhin ein Verfahren zur Herstellung von gehärteten Polymerformkörpern oder mit gehärteten Polymeren beschichteten Körpern, worin eine oder mehrere lichthärtende Polymerzusammensetzungen unter Verwendung der erfindungsgemäßen Bestrahlungseinheit gehärtet werden. Das genannte Verfahren umfasst bevorzugt die Schritte:
a) Gegebenenfalls Zusammensetzen der Komponenten der Bestrahlungseinheit,
b) Gegebenenfalls Einführen eines oder mehrerer zu beschichtender Körper in die Form zur Aufnahme der lichthärtenden Polymerzusammensetzung,
c) Einführen einer oder mehrerer lichthärtender Polymerzusammensetzungen in mindestens eine oder alle vorhandenen Formen, gegebenenfalls durch einen oder mehrere Einspritzkanäle,
d) Bestrahlen der lichthärtenden Polymerzusammensetzungen durch die transparente Schicht im Bereich der Einspritzkanäle und/oder der Form zur Aufnahme der lichthärtenden Polymerzusammensetzung,
e) Kontinuierliche oder diskontinuierliche Entnahme der gehärteten Polymerformkörper oder der Polymer-beschichteten Körper.

In einer bevorzugten Ausführungsform des Verfahrens umfasst dieses zusätzlich die Schritte:
a) Bestimmung des zur Aktivierung der Härtung wirksamen Wellenlängenbereichs,
b) Auswahl einer UV-Lichtquelle, deren Maximum der Strahlung im wirksamen
c) Wellenlängenbereich liegt.

Dabei kann auch eine Anpassung der durch die Flüssigkeitsschicht bereitgestellten Absorptionsleistung erfolgen. Der wirksame Wellenlängenbereich zu Härtung der lichthärtenden Polymerzusammensetzung liegt bevorzugt im Bereich von 345 bis 385 nm (absolutes oder lokales Maximum des Wellenlängenbereich).

Die vorliegende Erfindung stellt weiterhin die Verwendung der Formeinheit zur Herstellung von Polymerformkörpern oder mit Polymeren beschichteten Körpern bereit.

Mit der erfindungsgemäßen Bestrahlungseinheit können grundsätzlich beliebige photo- bzw.- lichthärtende Zusammensetzungen gehärtet werden, wie beispielsweise diverse Acrylate, Acrylatabkömmlinge, aliphatische oder aromatische Epoxide wie in EP 0826431 A1 offenbart weiterhin Vinyloxyderivate, Mercaptan substituierte aliphatische oder aromatische Monomere oder Oligomere ungesättigte Polyester, bisallyl-substutierte Ammoniumverbindungen wie in EP 548826 A2 oder EP 1265942 A2 offenbart einschließlich deren Abmischungen untereinander oder Mischungen mit transparenten Füllstoffen und Silikonkautschukzusammensetzungen etc. Weitere lichthärtende Polymer-, Oligomer- und/oder Monomerzusammensetzungen (A), welche gegebenenfalls auch in Kombination mit den Komponenten (A1) und (A2) verwendet werden können, sind beispielsweise diverse Acrylate, Acrylatabkömmlinge, aliphatische oder aromatische Epoxide wie in EP 0826431 A1 offenbart, weiterhin Vinyloxyderivate, Mercaptan-substituierte aliphatische oder aromatische Monomere oder Oligomere, ungesättigte Polyester, bisallyl-substutierte Ammoniumverbindungen wie in EP 548826 A2 oder EP 1265942 A2 offenbart einschließlich deren Abmischungen untereinander.

Bevorzugt sind lichthärtende Polymerzusammensetzungen, wie photohärtbare fließfähige Polymer-, Oligomer- und/oder Monomerzusammensetzungen, wie beispielsweise solche, enthaltend:
(A) ein oder mehrere Polymere, Oligomere und/oder Monomere welche eine oder mehrere photoreaktive Gruppen aufweisen,
(B) einen oder mehrere Katalysatoren,
(C) gegebenenfalls einen oder mehrere Sensibilisatoren,
(D) gegebenenfalls einen oder mehrere Inhibitoren,
(E) gegebenenfalls eine oder mehrere zur Komponente (A) reaktive Komponente,
(F) gegebenenfalls ein oder mehrere Füllstoffe.

Die Komponente (A) kann insbesondere aus fließfähigen Polyorganosiloxanen mit photoreaktive bzw. photohärtbaren funktionellen Gruppen ausgewählt werden.

In einer bevorzugten Ausführungsform wird die Komponente (A) aus Polyorganosiloxanen (A1) ausgewählt, enthaltend Siloxyeinheiten der Formel:

RₐR¹_{b}SiO_{(4-a-b)/2} (1),

worin die Gruppen R, die identisch oder voneinander verschieden sein können, substituierte oder unsubstituierte einwertige Kohlenwasserstoffgruppe sind, die keine photoreaktiven Gruppen aufweisen; die Gruppen R¹, die identisch oder voneinander verschieden sein können, photoreaktive Gruppen sind; und a und b ganze Zahlen von 0 bis 3 sind und die Indizes für die jeweilige Siloxy-Einheit (M,D,T oder Q) darstellen, also für

| | |
|---|---|
| M: | a + b = 3, |
| D: | a + b = 2, |
| T: | a + b = 1, |
| Q: | a + b = 0, |

welche im Mittel weniger als 10 mol-% verzweigende Einheiten (T, Q) aufweisen, und bevorzugt eine Viskosität von 0,01 bis 100.000 Pa·s bei 25 °C aufweisen, und worin bevorzugt das Molverhältnis R¹/Si = 2/10000 bis 2/10 also 2*10⁻⁴ bis 0,2, ist. und/oder
(A2) Photoreaktive Polyorganosiloxane der Formel

RₐR¹_{b}SiO_{(4-a-b)/2} (1'),

worin a und b wie oben definiert sind, welche jedoch im Mittel mehr als 10 mol.% verzweigende Einheiten (T, Q) aufweisen, also harzartig sind, welche bei Raumtemperatur (25 °C) fest oder flüssig sind. Bevorzugt sind photoreaktive Polyorganosiloxane (A2) mit überwiegend M, T und Q-Einheiten, worin das Molverhältnis M/(Q + T) = 0,4 bis 4,0 ist und das Molverhältnis R¹/Si = 0,01 bis 0,50 ist.

Des Weiteren kann man auch Mischungen verschiedener Komponenten (A1), verschiedener Komponenten (A2) sowie Mischungen von einer oder mehrerer Komponenten (A1) mit einer oder mehreren Komponenten (A2) als Komponente (A) verwenden.

Im Polyorganosiloxan der Formel (1) oder (1') sind die durch R dargestellten einwertigen Kohlenwasserstoffgruppen vorzugsweise solche mit 1 bis 10 Kohlenstoffatomen, insbesondere 1 bis 8 Kohlenstoffatomen, wie beispielsweise Alkylgruppen, ausgewählt aus der Gruppe, die besteht aus Methyl-, Ethyl-, n-Propyl-, Isopropyl-, n-Butyl-, Isobutyl-, tert-Butyl-, Pentyl-, Hexyl-, Octyl- und Decyl-, Cycloalkyl-Einheiten, wie z. B. Cyclopentyl- und Cyclohexyl-, Aryleinheiten, wie z. B. Phenyl- und Tolyl-, und Aralkylgruppen, wie z. B. Benzyl und Phenylethyl.

In den Polyorganosiloxanen der Formel (1) oder (1') können in einem gewissen Umfang beispielsweise bis zu 20 mol-%, bevorzugt bis zu 10 mol-%, noch bevorzugter bis zu 5 mol-% (bezogen auf die Anzahl der Siliziumatome) als Gruppe R auch Alkoxygruppen vorliegen wie solche mit 1 bis 8 Kohlenstoffatomen, insbesondere 1 bis 4 Kohlenstoffatomen, wie z. B. Methoxy, Ethoxy, Propoxy und Butoxy.

R ist nicht auf unsubstituierte, einwertigen Kohlenwasserstoff- (und gegebenenfalls Alkoxygruppen) beschränkt, sondern umfasst auch substituierte Formen dieser Gruppen, worin einige oder alle der Wasserstoffatome, die an Kohlenstoffatome gebunden sind, durch Halogenatome, Cyanogruppen, Alkoxygruppen oder ähnliches ersetzt sind, beispielsweise substituierte Kohlenwasserstoffgruppen wie z. B. Chlormethyl, 3,3,3-Trifluorpropyl und Cyanoethyl und substituierte Alkoxygruppen.

Bevorzugt sind Methyl-, Phenyl- und 3,3,3-Trifluorpropylreste am Silicium.

R¹ ist eine photoreaktive Gruppe, ausgewählt aus, Alkenyl-Gruppen, Methacryloylhaltigen Gruppen, Alkenyloxyalkyl-haltige, wie Vinyloxyalkyl-haltige, Cyclohexenylethyl, Limonyl-, Dicyclopentadienyl-,Norbornenyl- und Epoxyalkyl-haltigen Gruppen.

Die (Meth)acryloylhaltigen Gruppen umfassen beispielsweise (Meth)acryloxy-alkylgruppen, in denen die Alkylgruppierung 2 bis 14 Kohlenstoffatome aufweist, wie z. B. γ-Acryloxypropyl und γ-Methacryloxypropyl.

Die Vinyloxyalkylgruppen umfassen beispielsweise jene Gruppen, in denen die Alkylgruppierung 3 bis 8 Kohlenstoffatome aufweist, wie z. B. Vinyloxypropyl.

Die Epoxy-haltigen Gruppen umfassen beispielsweise Glycidyloxyalkylgruppen, in denen die Alkylgruppierung 3 bis 14 Kohlenstoffatome aufweist, wie z. B. γ-Glycidyloxypropyl, und (3,4-Epoxycyclohexyl)alkylgruppen.

Zumindest zwei, vorzugsweise 2 bis etwa 10, durch R¹ dargestellte photoreaktive Gruppen sollten pro Molekül vorhanden sein. Mit weniger als zwei durch R¹ dargestellten photoreaktiven Gruppen sind Polyorganosiloxane nicht vollständig härtbar. Es ist anzumerken, dass R¹ am Ende oder mitten in einer Molekülkette an ein Siliziumatom gebunden sein kann.

Die photoreaktiven Gruppen R¹ lassen sich im wesentlichen nach ihrem Reaktionsmechanismus 3 Gruppen zuordnen, wie die der radikalisch aktivierbaren Gruppen, die der kationisch radikalisch aktivierbare Gruppen und solche zur Hydrosilylierung befähigten Gruppen.

Bevorzugt sind die Methacryloxypropyl-, Mercatopropyl-, Vinyloxyalkyl-, Vinyl- und die γ-Glycidyloxypropylreste am Silicium.

Das verzweigte Polyorganosiloxan (A2), welches bevorzugt optional verwendet werden kann, ist ein Silikonharz, welches bevorzugt eine erhöhte Menge reaktiver Gruppen R¹ aufweist, somit zu einer erhöhten Vernetzungsdichte beitragen kann, falls es in entsprechenden Mengen mitverwendet wird. Die Komponente (A2) steigert Festigkeit, Weiterreißfestigkeit und Härte. Eine ähnliche Wirkung erzielt auch eine Komponente (A1) falls diese eine hohe Konzentration von 1-50 mol.% der reaktiven Gruppen R¹, bezogen auf alle Si-Atome, ausweist und man sie in einer Menge von 0,2 bis 90 Gew.%, bevorzugt 1 bis 40 Gew.% bezogen auf die Gesamtmenge der Komponenten (A1) zum Beispiel mit einer weiteren Komponente(n) (A1), die welche bevorzugt nur 0,01 bis 0,9 mol.% reaktive Gruppen aufweist, einsetzt.

Mit derartigen Abmischungen kann der Einsatz von verstärkenden Füllstoffen ganz oder teilweise vermieden werden, wodurch die Transparenz der Zusammensetzung auf einem hohen Niveau beibehalten werden kann. Eine hohe Transparenz der lichthärtenden Polymerzusammensetzungen erleichtert das tiefe Eindringen der photoaktivierenden UV-Strahlung in das Formennest in einem Verfahren zur Herstellung von Formartikeln aus photohärtbaren Polymeren.

Das Silikonharz (A2) wird beispielsweise synthetisiert, indem man Vinyldimethylmethoxysilan und Tetramethoxysilan in gewünschten molaren Verhältnis mischt, hydrolysiert, zu einem Polymer kondensiert und gegebenenfalls equilibriert. In andere Synthesen coyhydrolysiert man Vinyltrimethoxysilan und Tetramethoxysilan im gewünschten Verhältnis zur Einführung von trifunktionellen T-oder Q-Gruppen. An Stelle der Alkoxysilane können auch entsprechend Chlorsilane oder Gemische aus Chlorsilane und Alkoxysilane treten. An Stelle von Tetramethoxysilan kann auch beispielsweise Wasserglas eingesetzt werden. Ebenso ist der Einsatz von Hexaorganodisiloxanen möglich, wie 1,3-Divinyl-1,1,3,3-tetramethyldisiloxan, welche zum Hydrolysat gegeben und in der Polymerisationsreaktion kondensiert oder equilibriert werden.

Die Komponente (A2) lässt sich beispielsweise auch mit bis 90 Gew.-% (bezogen auf die Gesamtmenge der Komponenten (A1) und (A2)) verwenden , soweit duromere, spröde Eigenschaften der gehärteten Zusammensetzung gewünscht bzw. akzeptiert werden.

Die Komponente (B) wird aus einem oder mehreren Katalysatoren ausgewählt, welche die Härtung der photoreaktiven Gruppen in der Komponente bewirken können. Abhängig von der Art der photoreaktiven Gruppen bzw. vom Härtungsmechanismus schließen die Katalysatoren beispielsweise ein:

Für die radikalische Härtung, d.h. R¹ ist ein Alkenyl-, Methacryloyl-, Alkenyl- wie Vinyl, Allyl, Hexenyl, Cyclohexenylethyl, Limonyl-, funktionelles Polyorganosiloxan (A), sind dies:
Photoinitiatoren, wie Acylphosphinoxide, Acetophenon, Propiophenon, Benzophenon, Xanthol, Fluoren, Benzaldehyd, Anthrachinon, Triphenylamin, Carbazol, 3-Methylacetophenon, 4-Methylacetophenon, 3-Pentylacetophenon, 4-Methoxyacetophenon, 3-Bromacetophenon, 4-Allylacetophenon, p-Diacetylbenzol, 3-Methoxybenzophenon, 4-Methylbenzophenon, 4-Chlorbenzophenon, 4,4-Dimethoxybenzophenon, 4-Chlor-4-benzylbenzophenon, 3-Chlorxanthon, 3,9-Dichlorxanthon, 3-Chlor-8-nonylxanthon, Benzoin, Benzoinether, wie Benzoinmethylether und Benzoinbutylether, Bis(4-dimethylaminophenol)keton, Benzylmethoxyketal und 2-Chlorthioxanthon, photoaktivierbare Peroxide, wie Perbenzoatester der allgemeinen Formel:

A-O-O-CO-C₆H₅-B

worin A eine Alkyl- oder Arylgruppe ist und B =Wasserstoff, Alkyl, Halogen, Nitro, Amino, oder Amido ist, wie t-Butylperbenzoat und para-substitutierte Derivate davon, wie t-Butyl-peroxy-p-nitrobenzoat, t-Butyl-peroxy-p-methoxybenzoat, t-Butylperoxy-p-methylbenzoat und t-Butylperoxy-p-chlorbenzoat, Azoverbindungen, wie Azodicarboxylester, Azodicarbosäureamid oder Azodiisobutyronitril.

Für die kationische Härtung, wie für epoxyfunktionelle oder alkenyletherfunktionelle d.h. vinyloxy-, propenoxy-funktionelle Polydiorganosiloxane, sind dies:
Oniumsalze wie beschrieben beispielsweise in der US 4,576,999:

R⁵₂I⁺ MXₙ⁻

R⁵₃S⁺ MXₙ⁻

R⁵₃Se⁺ MXₙ⁻

R⁵₄P⁺ MXₙ⁻

R⁵₄N⁺ MXₙ⁻

worin R⁵ gleich oder verschieden sein kann und ausgewählt wird aus organischen Radikalen mit bis zu 30 Kohlenstoffatomen, wie aromatischen Kohlenwasserstoffresten, das Oniumanion wird ausgewählt aus der Gruppe MXₙ, worin MXₙ ein Anion ist, wie BF₄⁻, PF₆⁻, AsF₆⁻, SbF₆⁻, SbCl₆⁻, HSO₄⁻ , ClO₄⁻, etc.. Weitere Oniumkatalysatoren sind aus EP 703236 oder US 5,866,261 bekannt, wie B(C₆F₅)₄⁻Salze. Weiterhin schließen Oniumkatalysatoren Diazoniumsalze wie z. B. 4-Morpholino-2,5-dimethoxy-phenyldiazonium-fluoroborat ein.

Für die Härtung durch Hydrosilylierung, d.h. bei Verwendung von Alkenyl-funktionellen Polydiorganosiloxanen, wählt man die Katalysatoren (B) aus der Gruppe der photoaktivierbaren Hydrosilylierungskatalysatoren, insbesondere Metallverbindungen, wie von Ag, Co, Fe, Ir, Os, Ni, Pd, Pt, Rh und Ru.

Beispiele für photoaktivierbare Platinkatalysatoren (B) sind die (η-Diolefin)(σ-Aryl)-Platinkomplexe, wie sie in US 4,530,879 A offenbart werden: (worin "COD" Cyclooctadien, "COT" Cyclooctatetraen, und "NBD" Norbornadien bedeuten):
(1,5-COD)diphenylplatin
(1,3,5,7-COT)diphenylplatin
(2,5-NBD)diphenylplatin
(3a,4,7,7a-tetrahydro-4,7-methanoindene)diphenylplatin
(1,5-COD)-bis(4-methylphenyl)platin
(1,5-COD)-bis(2-methylphenyl)platin
(1,5-COD)-bis(2-methoxyphenyl)platin
(1,5-COD)-bis(3-methoxyphenyl)platin
(1,5-COD)-bis(4-phenoxyphenyl)platin
(1,5-COD)-bis(4-methylthiophenyl)platin
(1,5-COD)-bis(3-chlorophenyl)platin
(1,5-COD)-bis(4-fluorophenyl)platin
(1,5-COD)-bis(di2,4-fluorophenyl)platin
(1,5-COD)-bis(4-bromophenyl)platin
(1,5-COD)-bis(4-trifluoromethylphenyl)platin
(1,5-COD)-bis(di-3,5-trifluoromethylphenyl)platin
(1,5-COD)-bis(3-trifluoromethylphenyl)platin
(1,5-COD)-bis(2,4-bis(trifluoromethyl)phenyl)platin
(1,5-COD)-bis(4-dimethylaminophenyl)platin
(1,5-COD)-bis(4-acetylphenyl)platin
(1,5-COD)-bis(trimethylsilyloxyphenyl)platin
(1,5-COD)-bis(trimethylsilylphenyl)platin
(1,5-COD)-bis(pentafluorophenyl)platin
(1,5-COD)-bis(4-benzylphenyl)platin
(1,5-COD)-bis(1-naphthyl)platin
(1,5-COD)-naphthylphenylplatin
(1,5-COD)-bis(2H-chromen-2-yl)platin
(1,5-COD)-bis(xanthen-1-phenyl)platin
(1,3,5-cycloheptatriene)diphenylplatin
(1 -chloro-1,5-COD)diphenylplatin
(1,5-dichloro-1,5-COD)diphenylplatin
(1 -fluoro-1,3,5,7-COT)diphenylplatin
(1,2,4,7-tetramethyl-1,3,5,7-COT)-bis(4-methylphenyl)platin
(7-chloro-2,5-NBD)diphenylplatin
(1,3-cyclohexadien)diphenylplatin
(1,4-cyclohexadien)diphenylplatin
(2,4-hexadien)diphenylplatin
(2,5-heptadien)diphenylplatin
(1,3-dodecadien)diphenylplatin
bis[η²-2-(2-propenyl)phenyl]platin
bis[η²-2-(ethenylphenyl)platin
bis[η²-2-(cyclohexen-1-ylmethyl)phenyl]platin. Weitere photoaktivierbare Katalysatoren schließen (η-Diolefin) (sigma-Alkyl)-platin-Komplexe, wie (1,5-COD)Pt(methyl)₂
(1,5-COD)Pt(benzyl)₂
(1,5-COD)Pt(hexyl)₂.

Besonders bevorzugte Katalysatoren sind im Hinblick auf ihre Reaktivität und Härtungsgeschwindigkeit: (η⁵-Cyclopentadienyl)-trialkyl-platin-Komplexverbindungen mit (Cp = cyclopentadienyl) wie
(Cp)trimethylplatin
(Cp)ethyldimethylplatin
(Cp)triethylplatin
(Cp)triallylplatin
(Cp)tripentylplatin
(Cp)trihexylplatin
(methyl-Cp)trimethylplatin
(trimethylsilyl-Cp)trimethylplatin
(phenyldimethylsilyl-Cp)trimethylplatin
(Cp)acetyldimethylplatin
(Cp)diethylmethylplatin
(Cp)triisopropylplatin
(Cp)tri(2-butyl)platin
(Cp)triallylplatin
(Cp)trinonylplatin
(Cp)tridodecylplatin
(Cp)tricyclopentylplatin
(Cp)tricyclohexylplatin
(chloro-Cp)trimethylplatin
(fluoro-Cp)trimethylplatin
(Cp)dimethylbenzylplatin
(triethylsilyl-Cp)trimethylplatin
(dimethylphenylsilyl-Cp)trimethylplatin
(methyldiphenylsilyl-Cp)trimethylplatin (triphenylsilyl-Cp)trihexylplatin
[1,3-bis(trimethylsilyl)-Cp]trimethylplatin (Dimethyloctadecylsilyl-Cp)trimethylplatin
1,3-bis[(Cp)trimethylplatin]tetramethyldisiloxan
1,3-bis[(Cp)trimethylplatin]dimethyldiphenyldisiloxan
1,3-bis[(Cp)dimethylphenylplatin]tetramethyldisiloxan
1,3,5-tris[(Cp)trimethylplatin]pentamethyltrisiloxan
1,3,5,7-tetra[(Cp)trimethylplatin]heptamethyltetrasiloxan (methoxy-Cp)trimethylplatin
(ethoxymethyl-Cp)ethyldimethylplatin (methyoxycarbonyl-Cp)trimethylplatin
(1,3-dimethyl-Cp)trimethylplatin (methyl-Cp)triisopropylplatin
(1,3-diacetyl-Cp)diethylmethylplatin
(1,2,3,4,5-pentachloro-Cp)trimethylplatin (phenyl-Cp)trimethylplatin
(Cp)acetyldimethylplatin
(Cp)propionyldimethylplatin
(Cp)acryloyldimethylplatin
(Cp)di(methacryloyl)ethylplatin
(Cp)dodecanoyldimethylplatin und
Trimethylplatin-cyclopentadienyl-terminierte Polysiloxane. Am meisten bevorzugt sind optional Alkyl- oder Trialkylsilyl-substitutierte Cyclopentadienyl-tris-alkylplatin-Verbindungen, Cyclopentadienyl-tris-(triorganosilyl)alkyl-platin-Verbindungen, insbesondere Alkylcyclopentadienyl-trimethyl-platin, wie Methylcyclopentadienyl-trimethyl-platin. Darüber hinaus können auch beispielsweise Pd-acetylacetonat oder Pd 3-methyl acetylacetonat gewählt werden.

Weiterhin können verwendet werden: Platindiketonate wie Pt-acetylacetonat siehe US 2003/0199603, US 6150546, US 6127446 (GE), Pt-trialkyl-diketonate der WO 95 /25735, Ru-Komplexe der US 2004 /0105934, wobei sämtliche Katalysatoren, welche in den genannten Patentschrift offenbart sind, zum Gegenstand der Offenbarung der vorliegenden Erfindung zu rechnen sind.

Die Menge der Komponente (B) für die durch Hydrosilylierungsreaktion härtenden Systeme beträgt zweckmäßig etwa 0,1-1000 ppm, bevorzugt 0,5-500 ppm, bevorzugter 1-100 ppm, besonders bevorzugt 2-50 ppm, noch mehr bevorzugt 2-20 ppm berechnet als Metal und bezogen auf das Gewicht der Komponente (A).

Die Vernetzungsgeschwindigkeit wird unter anderem bestimmt durch die ausgewählte Katalysator-Verbindung, deren Menge und auch vom Typ und der Menge der optional verwendeten zusätzlichen Komponente (D), dem Inhibitor für die Hydrosilylierungsreaktion.

Die Katalysatorkonzentration für die radikalisch härtbaren Zusammensetzungen beträgt für den photoaktivierbaren Katalysators (B) 0,01 bis 5 Gewichtsteile, noch bevorzugter 0,01 bis 0,5 Gewichtsteile pro 100 Gewichtsteile der Komponente (A).

Für die kationisch härtenden Zusammensetzungen wählt man die Mengen des photoaktivierbaren Katalysators (B) von bis zu 5 Gewichtsteilen pro 100 Gewichtsteile der Komponente (A) aus. Vorzugsweise setzt man den Katalysator (B) in der kleinstmöglichen Menge zu, mit welcher man die Zusammensetzung härten kann.

Weniger als 0,01 Teile des photoaktivierbaren Katalysators (B) bei radikalisch oder kationisch härtbaren Zusammensetzungen reichen oftmals nicht aus, um die Silikonkautschuk-Zusammensetzung zu härten. Mit mehr als 5 Teilen des Photoinitiators (B) kann die Lichtdurchlässigkeit vermindert sein, so dass die Härtungsreaktion zu lange dauern kann.

Die photohärtbaren Zusammensetzungen auf Basis der Komponente (A) umfassend Polymere, Oligomere und/oder Monomere, welche eine oder mehrere photoreaktive Gruppen aufweisen, wie insbesondere fließfähige Silikonkautschukzusammensetzungen enthaltend beispielsweise (A1) und/oder (A2), enthalten gegebenenfalls einen oder mehrere Sensibilisatoren (C). Sensibilisatoren (C) sind solche Verbindungen, die elektromagnetische Strahlung innerhalb des sichtbaren Bereiches des Lichtspektrums absorbieren können, d.h. 400 nm bis 800 nm, und diese Energie auf den Katalysator übertragen können. Sie sollten zweckmäßig über eine Energie des Triplett-Terms von mindestens 130 kJ/mol verfügen. Repräsentative Beispiele schließen beispielsweise polycyclische aromatische Sensibilisatoren ein, wie Anthracen, 9-Vinylanthracen, 9,10-Dimethylanthracen, 9,10-Dichloranthracen, 9,10-Dibromanthracen, 9,10-Diethylanthracen, 9,10-Diethoxyanthracen, 2-Ethyl-9,10-dimethylanthracen, Naphthacen, Pentacen, Benz-[a]anthracen, 7,12-Dimethylbenz[a]anthracen, Azulen, aromatische Ketone, wie 2-Chlorthioxanthon, 2-Isopropylthioxanthon, Thioxanthon, Anthrachinon, Benzophenon, 1-Chloranthrachinon, Bianthron, und dergleichen.

Im Falle von durch Hydrosilylierungreaktion härtenden Silikonkautschukzusammensetzungen, enthaltend beispielsweise die Komponenten (A1) und/oder (A2), enthalten diese gegebenenfalls einen oder mehrere Inhibitoren (D), welche die Geschwindigkeit der Hydrosilylierungsreaktion beeinflussen. Damit kann man Einfluß auf die Vernetzungsgeschwindigkeit nehmen und beispielsweise sicherstellen, dass die Hydrosilylierungsreaktion nicht vorzeitig, insbesondere außerhalb der Formennester Silikonkautschukzusammensetzungen zu härten beginnt. Beispiele der an sich bekannten Inhibitoren schließen beispielsweise ein: Ethylenisch ungesättigte Amide (US 4 337 332); acetylenische Verbindungen (US 3 445 420, US 4 347 346), Isocyanate (US 3 882 083); ungesättigte Siloxane, (US 3 989 667); ungesättigte Diester (US 4 256 870, US 4 476 166 und US 4 562 096), Hydroperoxide (US 4 061 609), Ketone (US 3 418 731); Sulfoxide, Amine, Phosphine, Phosphite, Nitrile (US 3 344 111), Diaziridine (US 4 043 977), wie Alkinole, wie sie in US 3 445 420 beschrieben sind, wie Ethinylcyclohexanol und 3-Methylbutinol und ungesättigte Carbonsäurester (US 4 256 870) sowie Diallylmaleat und Dimethylmaleat und die Fumarate der US 4 562 096 und US 4 774 111, wie Diethylfumarat, Diallylfumarat oder Bis-(methoxyisopropyl)maleat, weiterhin Vinylsiloxane, wie 1,3-Divinyltetramethyldisiloxan oder Tetravinyltetramethyltetracyclosiloxan.

Die Menge der Inhibitorkomponente wird so gewählt, dass die gewünschte Vernetzungszeit unter den gewählten Verarbeitungsbedingungen insbesondere in Abstimmung mit dem Katalysator (B) und den anderen Komponenten in geeigneter Weise, d.h. Zeit und Temperatur eingestellt werden kann. Die Menge der Inhibitorkomponente liegt bevorzugt bei 0,0001 bis 2 Gew. % eines oder mehrerer Inhibitoren bezogen auf die Menge der Komponente (A).

Gegebenenfalls enthält die photohärtbare, fließfähige Polymer-, Oligomer- und/oder Monomer-Zusammensetzung, wie beispielsweise die photohärtende Silikonkautschuk-Zusammensetzung eine oder mehrere zur Komponente (A) reaktive Komponente(n) (E), die mit (A) chemische Bindungen im Sinne einer Polymerisation, Oligomerisation oder Vernetzung aufbaut.

Im Falle der durch Hydrosilylierung härtenden Alkenyl-funktionellen Polyorganosiloxane (A) weisen die photohärtenden Silikonkautschuk-Zusammensetzungen zwingend SiH-funktionelle Polyorganosiloxane als Komponente (E) auf. Vorzugsweise weisen in diesem Fall mindestens eine der Komponenten (A) oder (E) eine höhere Funktionalität als 2 auf, so dass vernetzte Strukturen gebildet werden. Als SiH-funktionelle Polyorganosiloxane (E) werden beispielsweise die SiH-funktionellen Polyorganohydrogensiloxane ausgewählt aus der Gruppe der linearen, cyclischen oder verzweigten SiH-haltigen Polyorganosiloxane, wie

HR₂SiO(R₂SiO)_{z}(RHSiO)ₚSiR₂H (2a)

HMe₂SiO(Me₂SiO)_{z}(MeHSiO)ₚSiMe₂H (2b)

Me₃SiO(Me₂SiO)_{z}(MeHSiO)ₚSiMe₃ (2c)

Me₃SiO(MeHSiO)ₚSiMe₃ (2d)

{[R₂R³SiO_{1/2}]₀₋₃[R³SiO_{3/2}][R⁴O)ₙ}ₘ (2e)

{[SiO_{4/2}}][R²O_{1/2}]ₙ[R₂R³SiO_{1/2}]_{0,01-10}[R³SiO_{3/2}]₀₋₅₀[RR³SiO_{2/2}]₀₋₁₀₀₀}ₘ (2f)

mit
z = 0 bis 1000
p = 0 bis 100
z+p = 1 bis 1000
n = 0,001 bis 4
m = 1 bis 1000,
worin R²O_{1/2} ein Alkoxyrest am Silicium ist,

R³ = Wasserstoff oder R, wie oben definiert, bevorzugt C₁-C₁₂-Alkyl, C₁-C₁₂-Alkoxy(C₁-C₁₂)-alkyl, C₅-C₃₀-Cycloalkyl oder C₆-C₃₀-Ary|, C₁-C₁₂-Alkyl(C₆-C₁₀)-aryl, wobei diese Reste gegebenenfalls jeweils durch eines oder mehrere F-Atome substituiert sein können und/oder eine oder mehrere O-Gruppen enthalten können, mit der Maßgabe, dass mindestens zwei Reste R³ je Molekül Wasserstoff sind.

Bei diesem durch Hydrosilylierung härtendem System wird das Verhältnis der Komponente (E) zur Komponente (A) bevorzugt so gewählt, dass ein molares Verhältnis von Si-H- zu Si-Alkenyl-Einheiten von etwa 0,5 bis 20 : 1, bevorzugt von 1 bis 3 : 1 vorliegt. Die bevorzugte Menge der als Komponente (E) verwendeten Polyorganohydrogensiloxane liegt bei 0,1 bis 200 Gewichtsteile bezogen auf 100 Gewichtsteile der Komponente (A). Über das molare Verhältnis von SiH- zu Si-Alkenyl-Einheiten lassen sich viele Eigenschaften, wie die gummimechanischen Eigenschaften, die Vernetzungsgeschwindigkeit, die Stabilität und die Oberflächenklebrigkeit beeinflussen.

Die Polyorganohydrogensiloxane (E) können linear, verzweigt, cyclisch sein. Das Polyorganohydrogensiloxane weist beispielsweise eine Viskosität von etwa 5 bis 1000 mPa·s bei 25 °C auf.

Im Falle der radikalisch härtenden Silikonzusammensetzungen, worin insbesondere Alkenyl- oder Methacryloyl-funktionelle Polydiorganosiloxane (A) verwendet werden, können wahlweise als Vernetzer (E) polyfunktionelle Mercapto-Verbindungen verwendet werden, wie diejenigen, die in der EP 832936 A1 genannten Mercapto-Verbindungen, insbesondere Mercaptosilane oder Mercaptopolysiloxane mit 2 bis 50 Mercaptogruppen. Im wesentlichen können auch ohne Einschränkung polyfunktionelle radikalisch vernetzbare Gruppen aufweisende Monomere, Oligomere oder Polymere verwendet werden, wie Polyalkenyl-Verbindungen, wie Glycerintri(meth)acrylat, Trimethylolpropantri(meth)acrylat, Pentaerythrit-tri(meth)-acrylat oder Pentaerythrit-tetra(meth)acrylat.

Die erfindungsgemäß verwendeten photohärtbaren Zusammensetzungen können gegebenenfalls einen oder mehrere Füllstoffe als Komponente (F) enthalten, wie sie üblicherweise in photohärtbaren Zusammensetzungen, wie Silikonkautschuken verwendet werden, soweit sie ausreichend photoaktivierendes UV-Licht durchlassen. Damit sind deshalb zweckmäßig Verstärkerfüllstoffe bevorzugt, die keine lichtstreuenden Aggregate aufweisen, also bevorzugt diejenigen, die kleiner als 200 nm sind. Verstärkende Füllstoffe (F), die diese Voraussetzung erfüllen, werden beispielsweise ausgewählt aus der Gruppe, die enthält, bei 25 °C feste organische und anorganische Harze, wie Silsesquioxane, Metalloxide oder Metalloxidhydroxid-Gele, wie beispielsweise von Al, B, Ce, Ga, In, Si, Zn, Ti, Sn, Sb. Bevorzugt sind Kieselsäuren oder Silicagele mit einer mittleren Primärpartikelgröße im Bereich von 5- 20 nm und spezifischen Oberflächen nach BET von 150 bis 400 m²/g, die nach verschiedenen Verfahren hergestellt werden, wie durch Flammenhydrolyse, Fällungsverfahren, Sol-Gel-Verfahren, etc. Beispiele schließen ein: pyrogene Kieselsäuren, wie Aerosil ((Evonik), HDK (Wacker), Cab-O-Sil (Cabot).

Mit dem Begriff Füllstoff (F) sind auch Füllstoffe mit an die Oberfläche gebundenen Hydrophobierungsmittel bzw. Dispergierungsmittel bzw. Process-Aids, gemeint, die die Wechselwirkung des Füllstoffes mit dem Polymer, wie die verdickende Wirkung beeinflussen, vorzugsweise herabsetzen. Zur entsprechenden Oberflächenbehandlung der Füllstoffe setzt man vorzugsweise die bekannten Siliciumverbindungen ein, um diese Hydrophobierung zu erzielen. Bevorzugt sind Alkyl- oder Alkenylsilane oder Alkyl- oder Alkenylsiloxane. Die Oberflächenbehandlung kann z.B. 'in situ' durch die Zugabe von Silazanen, wie Hexamethyldisilazan und /oder 1,3-Divinyltetramethyl-disilazan, unter Zusatz von Wasser erfolgen. Diese sogenannte 'In-situ'-Hydrophobierung ist bevorzugt. Sie kann auch mit anderen gängigen Füllstoffbehandlungsmitteln erfolgen, wie Vinylalkoxysilanen, z.B. Vinyltrimethoxysilan, anderen Silanen mit ungesättigten organofunktionellen Gruppen, wie Methacryloxypropyl-, Epoxyalky- oder Mercaptoalkyltrialkoxysilanen erfolgen. Ebenso sind Polyorganosiloxandiole mit Kettenlängen von 2 bis 50, die ungesättigte organische oder andere organofunktionelle Reste tragen, um reaktive Stellen für die Vernetzungsreaktion bereitzustellen, bekannt. Beispiele für kommerziell erhältliche, vorab mit verschiedenen Silanen hydrophobierte Kieselsäuren sind: Aerosil R 972, R 974, R 976 oder R 812 oder z.B. HDK 2000 oder H30. Beispielhafte Handelsnamen für sogenannte hydrophobierte Fällungskieselsäuren, englisch 'Wet Silicas', sind Sipernat D10 oder D15 von Evonik. Diese vorab hydrophobierten Kieselsäuren sind weniger bevorzugt als die 'in-situ' -mit Silazanen hydrophobierten Kieselsäuren. Mit der Auswahl der Menge des Füllstofftyps, seiner Menge und der Art der Hydrophobierung können die gummi-mechanischen Eigenschaften und die rheologischen, d.h. verarbeitungstechnischen Eigenschaften der Silikonkautschukmischungen beeinflußt werden. Weitere bevorzugte Füllstoffe sind die hochtransparenten Kieselsäuren, welche aus Hydrolyse und Kondensation von Tetraalkoxysilanen und Hexamethyldisilazan und/oder 1,3-Divinyltetramethyl-disilazan hergestellt werden. Zur Erläuterung wird hier die US 43 44 800 zitiert, die diese Kieselsäuren beispielhaft definiert.

Für die Herstellung von Formartikeln aus photohärtbaren Polymerzusammensetzungen wählt man diese bevorzugt aus Zusammensetzungen aus, die enthalten:
a) 100 Gewichtsteile mindestens eines alkenylgruppenhaltigen Polyorganosiloxans (A) mit einem Viskositätsbereich von 0,01 und 100 Pa.s (25 °C; Schergeschwindigkeitsgefälle D von 1 s⁻¹),
b) von 0,5 bis 1000 ppm mindestens eines photoaktivierbaren Hydrosilylierungskatalysators (B), berechnet als Metall bezogen auf die Menge der Komponenten (A) bis (B),
c) gegebenenfalls einen oder mehrere Sensibilisatoren,
d) gegebenenfalls 0,0001 bis 2 Gew. % eines oder mehrerer Inhibitoren bezogen auf die Menge der Komponenten (A) bis (E), und gegebenenfalls weitere Hilfsstoffe.
e) 0,1 bis 200 Gewichtsteile mindestens eines Polyorganohydrogensiloxans, (E) wobei 0,5 bis 20 mol, bevorzugt 1 bis 5 mol der SiH-Gruppen pro mol der Alkenylgruppen in (A) eingesetzt werden,
f) 0 bis 100 Gewichtsteile eines oder mehrerer Füllstoffe.

Diese Polyorganosiloxan-Zusammensetzungen lassen sich auch in großen Schichtstärken bzw. Volumina mit UV-Licht in der erfindungsgemäßen integralen Bestrahlungs- und Formvorrichtung in kurzer Zeit härten und ohne größere Haftprobleme aus der Form entnehmen.

Die erfindungsgemäße integrale Bestrahlungseinheit zum Härten der zuvor erwähnten lichthärtenden Polymerzusammensetzungen, umfasst ein oder mehrere UV-Lichtquellen.

Der Begriff UV-Licht bedeutet im Rahmen der vorliegenden Erfindung elektromagnetische (aktinische) Strahlung, die fließfähige, photohärtbare Polymerzusammensetzungen, insbesondere Silikonkautschuk-Zusammensetzungen härten kann. Der Begriff 'photoaktivierbar' wird im Sinne 'Licht-aktivierbar' verwendet., wobei auch mittelbar photoaktivierbare Gruppen, die z.B. durch einen photoaktivierbaren Katalysator aktiviert werden, gemeint sind Vorzugsweise wird ultraviolettes Licht mit einem Maximum der spektralen Verteilung der Wellenlängen im Bereich von 300 bis 500 nm, insbesondere ultraviolettes Licht einer Wellenlänge im Bereich von 300 bis 400 nm, verwendet.

Bei den erfindungsgemäßen UV-Lichtquellen handelt es sich insbesondere um solche, bei denen der Anteil an der Gesamtstrahlung im Bereich von > 700 nm weniger als 15 % und im Bereich < 300 nm weniger als 15 % beträgt.

Die hier erwähnte Gesamtstrahlung bezieht sich auf die Strahlungsmenge, welche auf das transparente Element der integralen Bestrahlungseinheit trifft. Der Begriff der UV-Lichtquelle schließt daher sämtliche Elemente der Bestrahlungseinheit, einschließlich etwaiger wellenlängensensitiver Filter- oder dichroitischer Spiegelelemente ein, die man beispielsweise einsetzt, um zusätzlich IR-Strahlung aus dem genutzten Strahlengang auszulenken.

UV-Lichtquellen, bei denen der Anteil an der Gesamtstrahlung im Bereich von > 700 nm weniger als 15 % und im Bereich < 300 nm weniger als 15 % beträgt, zeichnen sich somit dadurch aus, dass sie im Wesentlichen in dem Bereich des Spektrums Strahlung bereitstellen, in dem eine Aktivierung der Härtung der lichthärtenden Polymerzusammensetzungen erfolgt. Dieser Wellenlängenbereich ist der Wellenlängenbereich, in dem die Aktivierung der lichthärtenden Polymerzusammensetzungen bzw. die Reaktionsgeschwindigkeit der Härtung maximal ist. Dieser Wellenlängenbereich hängt ab von der verwendeten lichthärtenden Polymerzusammensetzung, den dafür verwendeten Katalysatoren, Initiatoren, Sensibilisatoren etc. Bei den erfindungsgemäß bevorzugten durch Hydrosilylierung härtenden Polymerzusammensetzungen liegt der Bereich maximaler Aktivierung bzw. höchster Härtungsgeschwindigkeit im Allgemeinen bei etwa 345 bis 385 nm. Durch die Verwendung von UV-Lichtquellen mit einem besonders geringen Anteil der Strahlung im Bereich von > 700 nm bzw. < 300 nm wird einerseits der für einige Materialien für transparente Elemente (transparente Materialien) schädliche energiereiche UV-Anteil herabgesetzt und gleichzeitig der sowohl für die transparenten Materialien als auch für die lichthärtenden Polymerzusammensetzungen schädliche Anteil von Wärmestrahlung vermieden. Die energiereiche UV-Strahlung (Wellenlängenbereich < 300 nm) führt wie eingangs bereits erwähnt insbesondere zur vorzeitigen Alterung der transparenten Kunststoffformmaterialien, wie von PMMA, was sich etwa in einer Vergilbung, Versprödung und Verformung und letztlich durch den Ausfall des Formennestes ausdrückt, und zu hohen Produktionskosten führt. Die Wärmeabstrahlung der UV-Lichtquellen im Wellenlängenbereich von > 700 nm führt zu möglichen Verformungen der transparenten Elemente bzw. der Formennester, welche diese ebenfalls unbrauchbar macht, erfindungsgemäß jedoch reduziert wird. Bei Verwendung von UV-Lichtquellen, die inhärent einen Anteil an der Gesamtstrahlung im Bereich von > 700 nm
von weniger als 15 % und im Bereich < 300 nm von weniger als 15 % aufweisen, wie UV-LED-Lampen mit einem Maximum der Strahlung im Bereich zwischen 300 und 450 nm und geringer Breite der Strahlungsverteilung beispielsweise von +/- 25 nm, wird überdies die eingesetzte Energie maximal in eine zur Aktivierung dienende Strahlung überführt, was das Verfahren besonders energieeffizient macht.

Die Ermittlung der Anteile an der Gesamtstrahlung der UV-Lichtquelle im Bereich von > 700 nm und < 300 nm, kann beispielsweise durch Bestrahlung einer entsprechenden Messvorrichtung, insbesondere eines (Spektral-)-Photometers, Photozellen oder eines Bolometers erfolgen.

UV-Lichtquellen, die diesen Anforderungen genügen, schließen insbesondere UV-Lampen mit wellenlängenselektiven Filtern und/oder Spiegeln, UV-LED- und UV-Laser-Lichtquellen ein. Im Prinzip eignen somit als UV-Lichtquellen sämtliche konventionelle UV-Lampen, bevorzugt solche bei denen die Strahlungsenergie im Wellenlängenbereich von < 300 und > 700 nm geeignet beschränkt ist, oder solche UV-Lampen, welche systembedingt ihre UV-Strahlung in einem engen Wellenlängenbereich erzeugen, wie UV-LED-Lampen oder UV-Laser. Beispiele konventioneller UV-Lampen schließen ein: UV-Leuchtstofflampen, Hochdruckquecksilberdampflampen, UV-Bogenlampen, Metallhalogenidlampen, Xenonlampen, Blitzlampen, nicht dotierte oder Fe- oder Gallium-dotierte Quecksilberlampen, Schwarzlicht-Lampen, deren Strahlung bevorzugt insbesondere durch Verwendung von wellenlängen-selektiven Filtern und/oder Spiegeln, im Bereich von < 300 nm und > 700 nm unterdrückt wird. Beispiele von UV-Lampen, welche systembedingt bereits ihre UV-Strahlung in einem engen Wellenlängenbereich erzeugen, schließen beispielsweise UV-LED-Lampen oder UV-Laser ein, wie Excimerlaser. Diese sind aufgrund ihrer bereits geringen Wärmeentwicklung bevorzugt. Erfindungsgemäß bevorzugt ausgewählt werden insbesondere Lichtquellen, deren aufgenommene Energie möglichst vollständig in ein für die Lichthärtung nutzbares UV-Licht umgesetzt wird. Diese Lichtquellen weisen bereits einen verringerten Anteil von Wärmestrahlung auf. Vorzugsweise liegt der Anteil der Wärmestrahlung mit der Wellenlänge zwischen 700 -10000 nm unterhalb von 10 % der Gesamtstrahlung. Das Ausblenden durch wellenlängenselektive Spiegel oder Filter vermag den Anteil der Wärmestrahlung zwar auch um bis 85 % zu senken jedoch reicht dieser Effekt nicht immer aus, um die unerwünscht hohe Erwärmung der wärmempfindlichen, transparenten formgebenden Elemente zu verhindern. Hier setzt die vorliegende Erfindung durch Bereitstellung der Flüssigkeitsschicht an. Erfindungsgemäß wählt man die Lichtquellen bevorzugt aus der Gruppe der UV-LED-Lampen und UV-Laser. Beispiele für derartige Lichtquellen sind UV-LED-Lampen, wie LED Powerline und LED PowerPen der Firma Hönle, LED-Lampen der Firma Dr. Gröbel Ettlingen oder LED-Lampen von der Firma Phoseon Technology, wie die Typen FRDA 202, FRDA75. Ebenfalls besonders geeignet sind UV-Laser beispielsweise von Crystal Laser Systems Berlin beispielsweise vom Typ FDSS 355-300 plus oder Typen entsprechender Leistung im UV-Wellenlängenbereich von Microoptik LIMO Lissotschenko Mikrooptik GmbH in Dortmund. Die Laser-Lichtquellen benötigen darüber hinaus vorzugsweise eine Mikrooptik zur flächenhaften Verteilung bzw. Aufweitung des eng gebündelten Laserstrahles vor dem transparenten Element in der integralen Form- und Bestrahlungseinheit. Die genannten Strahlungsquellen erzeugen UV-Licht mit einem Maximum im Wellenlängenbereich von 300-500 nm, bevorzugt wird der Bereich von 250 - 400 nm noch bevorzugter 320-385 nm. Konventionelle UV-Lampen, in denen das ausgewählte UV-Lichtspektrum durch Verwendung geeigneter Filter und dichroitischer Spiegel erzeugt wird, schliessen beispielweise die UV-Print HPL der Firma Hönle in Gräfeling/München ein. Für entsprechende photoaktivierbare Polymerzusammensetzungen können durch Verwendung von UV-LED-Strahlungsquellen bevorzugt sehr enge Wellenlängenbereiche von ± 20 nm um einen gewünschten Maximalwert ausgewählt werden, für die dann nahezu mehr als 80 % der eingestrahlten Strahlungsleistung zur Photohärtung zur Verfügung stehen. So lassen sich beispielsweise die sigma-Platin-Katalysatoren (B) bevorzugt mit LED-UV-Lichtquellen im Bereich 365± 20 nm aktivieren. Die verwendeten UV-Lichtquellen weisen zweckmäßig eine Leistung von 0,1 - 12000 mWatt/cm² auf. Um die zu bestrahlende Fläche vollständig zu erreichen, können in einer integralen Bestrahlungseinheit mehrere derartige Bestrahlungsquellen zu einem Bestrahlungspaneel flächenartig ggfs. verbunden angeordnet werden. Die Formen zur Aufnahme der lichthärtenden Polymerzusammensetzung können teilweise transparent, vollständig oder nicht-transparent für das UV-Licht sein. Der Fall der nicht-transparenten Formen kann eintreten, wenn die Bestrahlung der lichthärtenden Polymerzusammensetzungen außerhalb des Formennestes, wie vorstehend bereits erwähnt beispielweise in einem Einspritzkanal erfolgt, was eine entsprechend ausreichend lange Topfzeit oder Gelzeit der lichthärtenden Polymerzusammensetzung erfordert, um die bestrahlte Polymerzusammensetzung in das Formennest zu überführen, ohne dass sie vorher in einem solchen Ausmaß härtet, welches eine Überführung in das Formennest verhindert. Das Formennest kann aus üblichen Materialien gebildet sein, wie Keramik, Metall, Kunststoff und/oder Glas, wobei deren Oberflächen entweder per se oder durch entsprechende Ausstattung eine Anhaftung der gehärteten Polymerzusammensetzung verhindern. Die Auswahl des Formennestmaterials richtet sich daher insbesondere nach den adhäsiven Eigenschaften oder wechselseitiger begrenzter Löslichkeit der zu härtenden Polymerzusammensetzung. Handelt es sich beispielsweise um den bevorzugten Fall der photohärtenden Silikonzusammensetzung, so werden nicht-haftende Formennestmaterialen aus transparenten Materialien, d.h. Polymethacrylate, und/oder nicht-transparenten Materialien, wie gegebenenfalls beschichtete Metalle verwendet. Wenn die Formennester nur teilweise aus transparenten Elementen bestehen oder gänzlich nicht-transparent sind, dann bestehen die nicht-transparenten Elemente bevorzugt aus Metall. Die Größe der Formennester richtet sich nach der zu erstellenden Form. An sich kann die Bestrahlungseinheit der Erfindung in beliebiger Größe dimensioniert werden, soweit die gewählten Dimensionen eine ausreichende Strahlungshärtung der lichthärtenden Polymerzusammensetzung erlauben. So können die Formennester beispielsweise zur Aufnahme großvolumiger elektrischer Isolatorbauteile in einem Gießverfahren eine längste Dimension von bis zu 10 m und ein Volumen von bis zu 300 Litern aufweisen. Die längste Dimension des Formkörpers kann mehr als 0,5 m, bevorzugt mehr als 1 m betragen. Bevorzugt sind bei großen Volumina mindestens etwa 0,5 Liter, bevorzugter mindestens etwa 3 Liter, noch bevorzugter mindestens etwa 10 Liter. Insbesondere bei großvolumigen Formkörpern von mindestens etwa 20 Liter Volumen können mit der Bestrahlungseinheit der Erfindung optimale Ergebnisse erzielt werden, da die dabei erforderlich hohe Strahlungsleistung mit einer geringen Wärmeentwicklung bereitgestellt werden kann, ohne dass es zu Beeinträchtigungen der Formennester oder der transparenten Elemente kommt, d.h. thermische Verformung, Spannungsrisse oder Haftung. Für diese großformatigen Gußteile beträgt der kürzeste Durchmesser im Allgemeinen mindestens etwa 1 cm, bevorzugt mindestens etwa 5 cm, noch bevorzugter mindestens etwa 10 cm. In einer anderen Ausführungsform lassen sich auch sehr kleine Formartikel bis in den Mikroliterbereich im Spritzgießverfahren herstellen. Diese Formartikel haben beispielsweise ein Volumen zwischen 0,001 - 500 mL und eine kleinste Dicke von 0,01 bis 10 mm. Auch dabei ist die Verwendung der kompakten Bestrahlungs- und Formeinheit vorteilhaft, weil in diesem Dimensionsbereich vorteilhaft Spritzgießmaschinen eingesetzt werden können, die die weitgehend automatisierte Herstellung von UV-Licht-gehärteten Formartikeln erlauben. Die Formennester müssen zur Entnahme der gehärteten Artikel zu öffnen sein. Dies bedeutet, dass sie im allgemeinen aus mindestens zwei miteinander lösbar in Verbindung stehenden formgebende Elementen gebildet werden, die gemeinsam eine oder mehrere Trennebenen aufweisen. Nach Härtung der photohärtenden Polymerzusammensetzung werden die formgebenden Elemente voneinander gelöst, und der gehärtete Formkörper bzw. Formartikel kann entnommen werden. Dies kann insbesondere automatisiert durch entsprechend angeordnete Ausrücker oder durch Anwendung von Pressluft erfolgen.

Als Material für die transparente Schicht welche gegebenenfalls auch vollständig das Formennest bilden, wählt man erfindungsgemäß Polymethacrylat (PMMA), wie Plexiglas ® Roehm & Haas Evonik. Es wurde u.a. gefunden, dass PMMA üblicher Industriequalität wegen zu starker Absorption von UV-Licht nicht eingesetzt werden kann. Geeignet sind vielmehr solche PMMA-Typen, die eine hohe UV-Durchlässigkeit aufweisen, bei denen insbesondere UV-Stabilisatoren bei der Herstellung im Wesentlichen ausgeschlossen werden. Beispiele solcher PMMA-Typen sind beispielsweise Plexiglas® 0Z18. Ähnlich müssen bevorzugt UVabsorbierende Additive in anderen für die Herstellung der transparenten Elemente verwendeten Materialien vermieden oder durch geeignete gering absorbierende Additive ersetzt oder ganz vermieden werden. Die UV-Licht-transparente Schicht wird so dimensioniert, dass sie dem Formeninnendruck standhalten kann (wie zum Beispiel solche mit einer Dicke von mindestens etwa 1 mm, bevorzugt mindestens 5 mm, noch bevorzugter mindestens etwa 25 mm). Gleichzeitig muss eine ausreichend große Durchtrittsfläche für das einzustrahlende UV-Licht bereitgestellt werden, um eine ausreichend schnelle Härtung zu ermöglichen. Die erforderliche Durchtrittsfläche richtet sich nach der benötigten UV-Strahlungsenergie, der gewünschten Härtungszeit und der zur Verfügung stehenden Leistung der UV-Lichtquellen, um in wirtschaftlich sinnvollen Taktzeiten 1- 600 s / Formartikel herstellen zu können. Zweckmäßig wird man bei Strahlungsleistungen von bis zu 12 W/cm² und transparente Durchtrittsflächen für das UV-Licht von 0,1 bis 1*10⁴ cm² anbieten, bevorzugt 1-100 cm² pro Lampe bzw. pro Lampenpaneel. Zur Erhöhung der die transparenten Schicht durchdringenden Strahlung und der Verkürzung der Härtungsdauer kann das Licht mehrerer UV-Lichtquellen insbesondere mittels geeigneter Spiegel und/oder Linsen gebündelt werden. Dies ist insbesondere bei kleinen transparenten Elemente unter Umständen erforderlich, da deren Fläche zu gering ist um das Licht mehrerer UV-Lichtquellen zu aufzunehmen. Oder mit anderen Worten, eine Bündelung ist in solchen Fällen nützlich, in denen die Strahlungsfläche der UV-Lichtquelle größer als die Fläche der UV-Licht-durchstrahlten transparenten Schicht ist. Die transparenten Schichten können als solche zum Aufbau des kompletten Formennestes eingesetzt werden, oder es werden nur Teile des Formennestes durch die transparente Schicht für den Lichteintritt geöffnet. Zur Verbesserung der Strahlungswirkung kann die Bestrahlungseinheit der Erfindung gegebenenfalls ein oder mehrere lichtleitende und/oder lichtreflektierende Elemente aufweisen. Diese Ausführungsform eignet sich beispielsweise in Fällen, wo die Formennester Schattenbereiche, beispielsweise auch durch im Formennest vorhandene Einlegeteile, aufweisen, welche durch Reflexion bzw. Lichtleitung das UV-Licht in den gewünschten Bereich des Formennestes bzw. in die dort vorhandene photohärtende Masse lenken. Geeignete lichtleitende und /oder lichtreflektierende Elemente schließen beispielsweise ein: verspiegelte Elemente, wie kugelförmige verspiegelte Elemente, welche eine konkave Lichtreflexion erzeugen, oder flächenförmige verspiegelte Elemente, Lichtleiter, wie Glasfaserbündel usw. Die lichtleitenden und/oder lichtreflektierenden Elemente können außerhalb aber auch im Innern des Formennestes angeordnet sein, so dass sie Teil der Formgebung sind. So kann etwa bei Vorliegen eines kugelförmigen Hohlraums im Formennest ein entsprechend geformtes kugelförmiges reflektierendes Element im Innern des Formennestes angeordnet sein.

Wie vorstehend erwähnt, weist die Bestrahlungseinheit bevorzugt ein oder mehrere Einspritzkanäle für die lichthärtende Polymerzusammensetzung auf, mittels derer die lichthärtende Polymerzusammensetzung gegebenenfalls nach vorheriger oder gleichzeitiger Bestrahlung in das Formennest eingespritzt werden kann. Die Einspritzkanäle weisen abhängig von der gewünschten Einspritzgeschwindigkeit (Volumen / Zeiteinheit) einen Durchmesser von beispielsweise etwa 0,5 - 8 mm auf. Die Abmessungen des Anschnittes bzw. Angußsteges liegen vorzugsweise im Bereich von 0,2 - 10 mm. Das Formennest muss bevorzugt in Zusammenwirken mit den Einspritzkanälen einen Druckunterschied zum Aussendruck aufweisen, um insbesondere ein blasenfreies Befüllen des Formennestes zu ermöglichen. Die Druckdifferenz kann beispielsweise mindestens etwa 0,1 bar, bevorzugt mindestens etwa 0,5 bar betragen. Dies schließt ein Befüllen unter Anlegen von Vakuum an das Formennest ein. Weiterhin kann die Bestrahlungs- und Formeinheit Entlüftungskanäle aufweisen, die der Entlüftung beim Befüllen der Formennester um einen blasenfreien gehärteten Artikel zu erhalten. Derartige Entlüftungskanäle weisen beispielsweise einen Durchmesser von mindestens etwa 1 mm auf. Zusätzlich können die Trennfugen der Formennester zur Entlüftung dienen.

Die Erfindung betrifft des weiteren die Verwendung der erfindungsgemäßen Bestrahlungs- und Formeinheit zur Herstellung von Polymerformkörpern oder mit Polymeren beschichteten Körpern, wie beispielsweise Dichtungen, großvolumige elektrische Isolatoren, wie Hochspannungsisolatoren, Feldsteuerelemente, Thyristoren, Kabelisolationen, Kabelmuffen, Optokuppler von Lichtleitern, Kabelverbinder, Verkapselungskomposite, Kabelendverschlüsse, die gegebenenfalls aus mehreren Materialien bestehen können, wie leitenden, nicht transparenten Elastomeren, Thermoplasten, welche vorher in das Formennest eingelegt werden, wirkstoffhaltige Trägermaterialien, Laminate, Kabelisolationen, Dichtungen an Lebensmittelbehälter aus Metall oder Kunststoffen, usw.

Bevorzugt sind die genannten Polymerformkörper oder Polymerbeschichtungen, welche vermittels der erfindungsgemäßen integralen Bestrahlungseinheit hergestellt werden, aus Silikon-Materialien.

Vermittels der erfindungsgemäßen Bestrahlungs- und Formeinheit können verschiedenste Formkörper aus den photohärtenden Polymermaterialien leicht mit hoher Produktivität hergestellt werden. Solche Formkörper können beispielsweise sein: Dichtungen, wie Flachdichtungen mit Trägerschicht, O-Ringe, Kabelisolationen, Isolatoren oder andere Formteile.

### Beispiele

### Beispiel 1

### Katalysatormischung (B)

Zu 10.000 Gew.-teilen eines linearen vinylendgestoppten Polydimethylsiloxans (A1) mit der Viskosität 1 Pa.s bei 25 °C mit einem Vinylgehalt von 0,13 mmol/g mischt man unter Lichtauschluß 1 Gew.-teile Trimethyl-(methyl)-cyclopentadienylplatin als Komponente (B) von Fa. Strem mit einem Platingehalt von 61,1% ggfs. unter Erwärmen bis 32 °C gelöst . Die Katalysatormischung mit 0,006 gew. Pt-Metall muß unter Lichtausschluß aufbewahrt werden.

### Beispiel 2

### Herstellung der Grundmischung

In einem Kneter werden 13,5 Gew.-teile dimethylvinylsiloxy-endgestopptes Polydimethylsiloxan (A1) mit einer Viskosität von 10 Pa.s bei 25 °C, 24,6 Gew.-teile dimethylvinylsiloxy-endgestopptes Polydimethylsiloxan (A1) mit einer Viskosität von 65 Pa.s bei 25 °C, 4,5 Teile Hexamethyldisilazan, 0,04 Gew.-teile 1,3-Divinyltetramethyldisilazan und 1,5 Gew.- teile Wasser gemischt, anschließend mit 17,2 Gew.-teilen pyrogener Kieselsäure (F) mit einer BET-Oberfläche von 300 m²/g vermischt, auf ca. 100 °C erwärmt, ca. eine Stunde gerührt und danach bei 150 bis 160 °C von Wasser und überschüssigen Silazan-/Silanolresten durch Verdampfen zum Schluß mit Vakuum bei p = 20 mbar befreit. Anschließend verdünnt man mit 17,4 Gew.-teilen eines dimethylvinylsiloxy-endgestoppten Polydimethylsiloxans (A1) mit einer Viskosität von 10 Pa.s. Man erhält das Ausgangsmaterial zur Herstellung der folgenden Teilmischungen.

### Teilmischung 2-1

Zu der vorstehend erhaltenen Grundmischung (ca. 89,5 Gew.-teile) gibt man unter Gelblicht (Ausschluß von Licht unter 700 nm) 0,3 Gew.-teile des Katalysators (B) mit einem Pt-Gehalt von 0,006 Gew. % wie in Beispiel 1 erhalten.

### Teilmischung 2-2

Zu der vorstehend erhaltenen Grundmischung (89,5 Gew.-teile) gibt man 20,8 Gew.-teile eines Vernetzers bestehend aus Trimethylsiloxy-endgestopptem Polymethylhydrogen-dimethylsiloxan (E) mit der Viskosität 35 mPa.s bei 25 °C mit einem SiH-Gehalt von 7,4 mmol/g der allgemeinen Formel M₂D₂₀D^{H}10 und vermischt gründlich in der Grundmischung.

Die Teilmischungen 2-1 und 2-2 des Beispieles 2 werden im Volumen-Verhältnis 90 : 110 mit einer Kolbendosierpumpe der Firma 2KM einem Statikmischer zugeführt, miteinander dort gemischt. Anschließend wird die Mischung in die Formennester der jeweiligen Formen überführt.

### Beispiel 3a Herstellung eines Hochspannungs-Schirmelementes

Die Mischung des Beispiels 2 wird in eine Form gemäß **Fig. 5** bei einer Temperatur von 20 - 30 °C über einen Einspritzkanal eingespritzt, in ca. 300 s gefüllt und durch die Kolbenfördereinheit wird ein Druck von 3 bar aufrechterhalten. Die Kavität **(4)** hat ein Volumen von 3000 ml. Die transparente Form **(5)** ist vollständig aus PMMA Typ Plexiglas® GS farblos Typ 0Z18 von der Firma Evonik Röhm GmbH (Dicke 10 mm, Höhe 250 mm) ausgebildet. Die metallische Formenwand **(6)** schließt die Elemente **(1)** bis **(2)** und **(4)** bis **(5)** ein und bildet zusammen mit ihnen die Hülle der Bestrahlungs- und Formeinheit.

Mit einer UV-Lampe mit ausgewähltem UV-Lichtspektrum (Anteil an der Gesamtstrahlung im Bereich von > 700 nm weniger als 15 % und im Bereich < 300 nm weniger als 15 %) des Typs UVAPRINT 500 HPL. Fa. Hönle **(2)** ausgerüstet mit H1 Quarzmantel, Luftkühlung und dichroitischem Reflektorspiegel sowie einem UV-Filter zur Auslenkung von IR Strahlung wird in einem Abstand von 20 mm zum Kühlkanal **(1)** über 120 s Licht mit einem Maximum der Strahlung im Wellenlängenbereich von 345-385 nm mit einer Intensität von 40-80 W/cm²- aus einer UV-Lampe senkrecht durch den Kühlkanal **(1)** mit den beiden Ummantelungsschichten aus PMMA eingestrahlt. Der Kühlkanal **(1)** hat eine Dicke der Flüssigkeitsschicht von 5 mm und eine durchstrahlte Fläche von 200 cm². Wasser mit einer Einlauftemperatur von 20 °C wird bei einem Massestrom von 5 g/(min.cm²) durch den Kühlkanal gepumpt. Das erwärmte Wasser führt man nach Kühlung über einen Wärmtauscher zurück. Nach 80 Bestrahlungszyklen mit problemloser Entnahme der gebildeten Silikonformkörper erreichte die Temperatur des UV-transparenten Einsatzes auf der der UV-Lichtquelle zugewandten Seite eine Temperatur von ca. 60 °C. Die gekühlte Acrylat-Form konnte ohne sichtbare Beschädigung mehr als 100 mal eingesetzt werden. Auch die der Lichtquelle zugewandte Ummantelungsschicht PMMA wies überraschend noch keine sichtbare Verformung und Vergilbung auf. Es kam zu keiner signifikanten Beeinträchtigung der Härtungsgeschwindigkeit. Der Formkörper im Formennest **(4)** ist nach 120 s Bestrahlungsdauer soweit vernetzt, dass an der Oberfläche eine Härte von 25 °Shore A gemessen wird, und der Formkörper entnommen werden kann. Zur Entnahme des Formkörpers wird die UV Lichtquelle bis zur weiteren Befüllung abgeschaltet d.h. durch einen Shutter auf Bereitschaft ohne Bestrahlung der Form umgeschaltet. Die erhaltenen Formkörper weisen weder Blasen noch klebrige Oberflächen auf.

### Beispiel 3b (Vergleichsversuch)

Versuch 3a wird wiederholt mit dem Unterschied, das die Bestrahlung ohne Kühlkanal erfolgt. Nach 80 Bestrahlungszyklen mit problemloser Entnahme der gebildeten Silikonformkörper erreichte die Temperatur des UV-transparenten Einsatzes auf der der UV-Lichtquelle zugewandten Seite eine Temperatur von ca. 80 °C. Die nicht-gekühlte Acrylat-Form wies nach 100 Bestrahlungen eine Verformung der dem UV-Licht zugewandten Formoberfläche aus PMMA und eine Vergilbung der bestrahlten Fläche auf. Die UV-Transparenz sank merklich, und es entstanden Mikrorisse an der Oberfläche.

## Patentansprüche

1. Formeinheit zum Härten lichthärtender Polymerzusammensetzungen, umfassend:
- mindestens eine Form zur Aufnahme einer lichthärtenden Polymerzusammensetzung,
- mindestens eine transparente Schicht, welche im Kontakt mit der lichthärtenden Polymerzusammensetzung steht und welche für die UV-Strahlen durchlässig ist, **dadurch gekennzeichnet, dass** die transparente Schicht, welche im Kontakt mit der lichthärtenden Polymerzusammensetzung steht, aus Polymethacrylat besteht, und dass die Formeinheit weiterhin
- mindestens eine Flüssigkeitsschicht, welche so angeordnet ist, dass sie beim Bestrahlen der transparenten Schicht durchstrahlt wird, umfasst.

2. Formeinheit zum Härten lichthärtender Polymerzusammensetzungen nach Anspruch 1, umfassend:
- ein oder mehrere UV-Lichtquellen zum Bestrahlen der transparenten Schicht, welche im Kontakt mit der lichthärtenden Polymerzusammensetzung steht, und welche zwischen den UV-Lichtquellen und der lichthärtenden Polymerzusammensetzung liegt,
- mindestens eine Form zur Aufnahme der lichthärtenden Polymerzusammensetzung, und
- mindestens eine Flüssigkeitsschicht, welche zwischen der transparenten Schicht und einer oder mehreren UV-Lichtquellen angeordnet ist, und welche mit den UV-Lichtquellen nicht fest verbunden ist.

3. Formeinheit nach Anspruch 1 oder 2, **dadurch gekennzeichnet, dass** die Dicke der Flüssigkeitsschicht zwischen 0,01 mm bis 50 mm beträgt.

4. Formeinheit nach einem der Ansprüche 1 bis 3, **dadurch gekennzeichnet, dass** die Flüssigkeitsschicht im Kontakt mit der transparenten Schicht steht.

5. Formeinheit nach einem der Ansprüche 1 bis 4, **dadurch gekennzeichnet, dass** die Flüssigkeitsschicht zwischen der transparenten Schicht und einer transparenten Ummantelungsschicht liegt, und mit diesen im Kontakt steht.

6. Formeinheit nach einem der Ansprüche 2 bis 3, **dadurch gekennzeichnet, dass** die Flüssigkeitsschicht zwischen zwei transparenten Ummantelungsschichten liegt, welche zwischen den UV-Lichtquellen und der transparenten Schicht angeordnet sind.

7. Formeinheit nach einem der Ansprüche 1 bis 6, **dadurch gekennzeichnet, dass** die Flüssigkeit der Flüssigkeitsschicht IR-Strahlung absorbiert.

8. Formeinheit nach einem der Ansprüche 1 bis 7, **dadurch gekennzeichnet, dass** sie ein oder mehrere Einspritzkanäle für die lichthärtenden Polymerzusammensetzungen aufweist.

9. Formeinheit nach einem der Ansprüche 2 bis 8, **dadurch gekennzeichnet, dass** die UV-Lichtquellen ausgewählt werden aus: UV-Leuchtstofflampen, Hochdruckquecksilberdampflampen, UV-Bogenlampen, Metallhalogenidlampen, Xenonlampen, Blitzlampen, nicht dotierte oder Fe- oder Gallium-dotierte Quecksilberlampen, und Schwarzlicht-Lampen.

10. Formeinheit nach einem oder mehreren der Ansprüche 1 bis 9, **dadurch gekennzeichnet dass** die genannte transparente Schicht Teil der Form zur Aufnahme der lichthärtenden Polymerzusammensetzungen und/oder Teil ein oder mehrerer Einspritzkanäle ist.

11. Formeinheit nach einem oder mehreren der Ansprüche 1 bis 10, worin die lichthärtenden Polymerzusammensetzungen lichthärtende Silikonzusammensetzungen sind.

12. Verfahren zur Herstellung von gehärteten Polymerformkörpern oder mit gehärteten Polymeren beschichteten Körpern, worin eine oder mehrere lichthärtende Polymerzusammensetzungen unter Verwendung der Formeinheit nach einem der Ansprüche 2 bis 11 gehärtet werden.

13. Verfahren nach Anspruch 12, welches die Schritte umfasst:
a) Gegebenenfalls Zusammensetzen der Komponenten der Formeinheit,
b) Gegebenenfalls Einführen eines oder mehrerer zu beschichtender Körper in die Form zur Aufnahme der lichthärtenden Polymerzusammensetzung,
c) Einführen einer oder mehrerer lichthärtender Polymerzusammensetzungen in mindestens eine oder alle vorhandenen Formen, gegebenenfalls durch einen oder mehrere Einspritzkanäle,
d) Bestrahlen der lichthärtenden Polymerzusammensetzungen durch die transparente Schicht im Bereich der Einspritzkanäle und/oder der Form zur Aufnahme der lichthärtenden Polymerzusammensetzung,
e) Kontinuierliche oder diskontinuierliche Entnahme der gehärteten Polymerformkörper oder der Polymer-beschichteten Körper.

14. Verwendung einer Formeinheit nach einem der Ansprüche 1 bis 11 zur Herstellung von Polymerformkörpern oder mit Polymeren beschichteten Körpern.

## Claims

1. A moulding unit for hardening light-curing polymer compositions, comprising:
- at least one mould for receiving a light-curing polymer composition,
- at least one transparent layer which is in contact with the light-curing polymer composition and which is permeable for the UV rays,
**characterized in that** the transparent layer which is in contact with the light-curing polymer composition, is composed of polymethacrylate and that the moulding unit furthermore comprises
- at least one liquid layer which is arranged such that rays pass through it during the irradiation of the transparent layer.

2. A moulding unit for hardening light-curing polymer compositions according to claim 1, comprising:
- one or more UV light sources for irradiating the transparent layer which is in contact with the light-curing polymer composition and which is placed between the UV light sources and the light-curing polymer composition,
- at least one mould for receiving the light-curing polymer composition, and
- at least one liquid layer, which is arranged between the transparent layer and one or more UV light sources, and which is not firmly connected to the UV light sources.

3. A moulding unit according to claim 1 or 2, **characterized in that** the thickness of the liquid layer is comprised between 0.01 mm and 50 mm.

4. A moulding unit according to one of the claims 1 through 3, **characterized in that** the liquid layer is in contact with the transparent layer.

5. A moulding unit according to one of the claims 1 through 4, **characterized in that** the liquid layer is arranged between the transparent layer and a transparent sheathing layer and is in contact with these ones.

6. A moulding unit according to one of the claims 2 through 3, **characterized in that** the liquid layer is placed between two transparent sheathing layers, which are arranged between the UV light sources and the transparent layer.

7. A moulding unit according to one of the claims 1 through 6, **characterized in that** the liquid of the liquid layer absorbs IR radiation.

8. A moulding unit according to one of the claims 1 through 7, **characterized in that** it comprises one or more injection channels for the light-curing polymer compositions.

9. A moulding unit according to one of the claims 2 through 8, **characterized in that** the UV light sources are selected from: UV fluorescent lamps, high pressure mercury vapour lamps, UV arc lamps, metal halide lamps, xenon lamps, flash lamps, not doped or Fe or gallium doped mercury lamps and black-light lamps.

10. A moulding unit according to one or more of the claims 1 through 9, **characterized in that** the said transparent layer is part of the mould for receiving the light-curing polymer compositions and/or part of one or more injection channels.

11. A moulding unit according to one or more of the claims 1 through 10, in which the light-curing polymer compositions are light-curing silicone compositions.

12. A method for producing cured polymer moulded articles or articles coated with cured polymers, in which one or more light-curing polymer compositions are cured while using the moulding unit according to one of the claims 2 through 11.

13. A method according to claim 12, comprising the steps:
a) if necessary, assembling the components of the moulding unit,
b) if necessary, introducing one or more articles to be coated into the mould for receiving the light-curing polymer composition,
c) introducing one or more light-curing polymer composition(s) into at least one or all existent moulds, where appropriate, through one or more injection channel(s),
d) irradiating the light-curing polymer compositions through the transparent layer in the area of the injection channels and/or the mould for receiving the light-curing polymer composition,
e) continuously or discontinuously removing the cured polymer moulded articles or the articles coated with polymer.

14. A use of a moulding unit according to one of the claims 1 through 11 for producing polymer moulded articles or articles coated with polymer.

## Revendications

1. Unité de moulage destinée à faire durcir des compositions de polymère durcissant à la lumière, comprenant :
- au moins un moule pour recevoir une composition de polymère durcissant à la lumière,
- au moins une couche transparente, qui est en contact avec la composition de polymère durcissant à la lumière, et qui est perméable aux rayons ultraviolets,
**caractérisée en ce que** la couche transparente, qui est en contact avec la composition de polymère durcissant à la lumière, consiste en polyméthacrylate, et que l'unité de moulage comprend en outre
- au moins une couche de liquide, qui est disposée de sorte qu'elle est traversée par des rayons pendant l'irradiation de la couche transparente.

2. Unité de moulage destinée à faire durcir des compositions de polymère durcissant à la lumière selon la revendication 1, comprenant :
- une ou plusieurs sources de lumière UV pour irradier la couche transparente, qui est en contact avec la composition de polymère durcissant à la lumière, et qui est disposée entre les sources de lumière UV et la composition de polymère durcissant à la lumière,
- au moins un moule pour recevoir la composition de polymère durcissant à la lumière, et
- au moins une couche de liquide, qui est disposée entre la couche transparente et une ou plusieurs sources de lumière UV, et qui n'est pas reliée de manière fixe aux sources de lumière UV.

3. Unité de moulage selon la revendication 1 ou la revendication 2, **caractérisée en ce que** l'épaisseur de la couche de liquide est comprise entre 0,01 mm et 50 mm.

4. Unité de moulage selon l'une des revendications 1 à 3, **caractérisée en ce que** la couche de liquide est en contact avec la couche transparente.

5. Unité de moulage selon l'une des revendications 1 à 4, **caractérisée en ce que** la couche de liquide se trouve entre la couche transparente et une couche de recouvrement transparente et elle est en contact avec celles-ci.

6. Unité de moulage selon l'une des revendications 2 à 3, **caractérisée en ce que** la couche de liquide se trouve entre deux couches de recouvrement transparentes, qui sont disposées entre les sources de lumière UV et la couche transparente.

7. Unité de moulage selon l'une des revendications 1 à 6, **caractérisée en ce que** le liquide de la couche de liquide absorbe du rayonnement infrarouge.

8. Unité de moulage selon l'une des revendications 1 à 7, **caractérisée en ce qu'**elle comprend un ou plusieurs canal/canaux d'injection pour les compositions de polymère durcissant à la lumière.

9. Unité de moulage selon l'une des revendications 2 à 8, **caractérisée en ce que** les sources de lumière UV sont sélectionnées parmi : des lampes fluorescentes UV, des lampes à vapeur de mercure à haute pression, des lampes à arc UV, des lampes à halogénure métallique, des lampes au xénon, des lampes clignotantes, des lampes à mercure non-dopées ou dopées avec le Fe ou le gallium et des lampes à lumière noire.

10. Unité de moulage selon l'une ou selon plusieurs des revendications 1 à 9, **caractérisée en ce que** ladite couche transparente fait partie du moule pour recevoir les compositions de polymère durcissant à la lumière et/ou fait partie d'un ou de plusieurs canal/canaux d'injection.

11. Unité de moulage selon l'une ou selon plusieurs des revendications 1 à 10, dans lequel les compositions de polymère durcissant à la lumière sont des compositions de silicone durcissant à la lumière.

12. Procédé de production d'articles moulés en polymère durci ou d'articles revêtus de polymères durcis, dans lequel une ou plusieurs compositions de polymère durcissant à la lumière sont durcies en utilisant l'unité de moulage selon l'une des revendications 2 à 11.

13. Procédé selon la revendication 12, qui comprend les étapes de :
a) le cas échéant, assembler les composants de l'unité de moulage,
b) le cas échéant, introduire un ou plusieurs article(s) à revêtir dans le moule pour recevoir la composition de polymère durcissant à la lumière,
c) introduire une ou plusieurs composition(s) de polymère durcissant à la lumière dans au moins un moule ou dans tous les moules existants, le cas échéant à travers un ou plusieurs canal/canaux d'injection,
d) irradier les compositions de polymère durcissant à la lumière à travers la couche transparente dans la zone des canaux d'injection et/ou du moule pour recevoir la composition de polymère durcissant à la lumière,
e) enlever de manière continue ou discontinue les articles moulés en polymère durci ou des articles revêtus de polymère.

14. Utilisation de l'unité de moulage selon l'une des revendications 1 à 11 pour produire des articles moulés en polymère ou des articles revêtus de polymère.
